# EUROPEAN PATENT APPLICATION

(11) **EP 2 469 882 A2**
(43) Date of publication of application: **27.06.2012**
(21) Application number: 11194827.9
(22) Date of filing: 21.12.2011
(51) Int. Cl.: H04N 21/4788, H04N 21/262, H04N 21/414, H04N 21/482

(54) **Social media shuffle system and application**

(30) Priority: 23.12.2010 US 201061426915 P; 23.12.2010 US 201061426946 P; 23.12.2010 US 201061426955 P; 23.12.2010 US 201061426959 P; 23.12.2010 US 201061426974 P; 23.12.2010 US 201061426989 P
(71) Applicant: Research In Motion Limited, Waterloo, ON N2L 3W8 (CA)
(72) Inventor: Sachdeva, Tarun, Mississauga, Ontario L4W 0B5 (CA); Dezelak, Jonathan Eli, Waterloo, Ontario N2L 3W8 (CA); Shiffman, Elliot Daniel, Mississauga, Ontario L4W 0B5 (CA); Levitz, Aron Robert, Waterloo, Ontario N2L 3W8 (CA); Hay, Catharine, Waterloo, Ontario N2L 3W8 (CA); Mitchell, Alistair, Mississauga, Ontario L4W 0B5 (CA); Sircar, Shiladitya, Kanata, Ontario K2K 3K1 (CA); Thomas, Edward Eric, Ottawa, Ontario K2K 3K1 (CA); Fukumoto, Scott, San Francisco, CA California 94158 (US)
(74) Representative: Moore, Barry

(57) **Abstract**

A system and application are provided that enable social media shuffle functionality. Social media shuffle functionality allows users of the social media system to enjoy a variety of media that is not stored in their profile by allowing them access to all media stored in a media catalog or otherwise available to a friend. A social media shuffle operation is provided whereby a user can easily enjoy a wide variety of media with minimal user effort.

## Description

### TECHNICAL FIELD

The following relates generally to networked computing and more specifically to a social media shuffle system and application.

### BACKGROUND

Networked computing devices provide media applications for enjoying various types of media; such as music, videos, electronic books, video games and pictures. These media applications allow users to enjoy the media by listening, watching, reading, playing and looking at the media. Media applications typically permit a user to enjoy one or more type of media.

These same networked computing devices provide social interaction applications for socially interacting with users of other networked computers. Social interaction applications, often referred to as social networking applications, allow users to interact with other users in various modes. Interactions include making friends, connecting to other users with similar interests, sharing pictures, chatting with friends and generally staying in contact with friends. Social interaction applications typically permit a user to interact with their friends.

### SUMMARY

The following provides a method for shuffling media items, the method comprising: receiving a shuffle message containing an indication of actuation of a media shuffle element on a mobile device; generating a shuffle list using the shuffle message, the shuffle list including a plurality of media items to be played by the mobile device; and facilitating transfer of at least one media item included in the shuffle list to the mobile device.

The following also provides a method for shuffling media items, the method comprising: detecting actuation of a media shuffle element on a mobile device; generating a shuffle message containing an indication of actuation of the media shuffle element; sending the shuffle message to a media server; and receiving at least one media item included in a shuffle list generated by the media server.

The following also provides a computer readable medium comprising computer executable instructions that when executed by a processor, perform operations for shuffling media items, the computer executable instructions comprising instructions for: receiving a shuffle message containing an indication of actuation of a media shuffle element on a mobile device; generating a shuffle list using the shuffle message, the shuffle list including a plurality of media items to be played by the mobile device; and facilitating transfer of at least one media item included in the shuffle list to the mobile device.

The following also provides a media server comprising a processor, memory, and at least one communication interface, the memory comprising computer executable instructions that when executed by the processor, perform operations for shuffling media items, the computer executable instructions comprising instructions for: receiving a shuffle message containing an indication of actuation of a media shuffle element on a mobile device; generating a shuffle list using the shuffle message, the shuffle list including a plurality of media items to be played by the mobile device; and facilitating transfer of at least one media item included in the shuffle list to the mobile device.

The following also provides a computer readable medium comprising computer executable instructions that when executed by a processor, perform operations for shuffling media items, the computer executable instructions comprising instructions for: detecting actuation of a media shuffle element; generating a shuffle message containing an indication of actuation of the media shuffle element; sending the shuffle message to a media server; and receiving at least one media item included in a shuffle list generated by the media server.

The following also provides a mobile device comprising a processor, memory, and at least one communication interface, the memory comprising computer executable instructions that when executed by the processor, perform operations for shuffling media items, the computer executable instructions comprising instructions for: detecting actuation of a media shuffle element on the mobile device; generating a shuffle message containing an indication of actuation of the media shuffle element; sending the shuffle message to a media server; and receiving at least one media item included in a shuffle list generated by the media server.

### BRIEF DESCRIPTION OF THE DRAWINGS

Embodiments will now be described by way of example only with reference to the appended drawings wherein:

FIG. 1 is a block diagram of an example wireless communication system comprising a peer-to-peer (P2P) system;

FIG. 2 is a block diagram illustrating an example P2P message;

FIG. 3 is a block diagram illustrating one example configuration for the wireless infrastructure and P2P system shown in FIG. 1;

FIG. 4 is a block diagram illustrating one example configuration for a social media system and application;

FIG. 5 is a diagram of a mobile device user interface showing an exemplary homepage of a social media application;

FIG. 6 is a second diagram of a mobile device user interface showing an exemplary catalog homepage of a social media application;

FIG. 7 is a third diagram of a mobile device user interface showing an exemplary social media search screen of a social media application;

FIG. 8 shows a fourth diagram of a mobile device user interface showing an exemplary list of media information items of a social media application;

FIG. 9 shows a fifth diagram of a mobile device user interface showing an exemplary playlist view of a social media application;

FIG. 10 shows a sixth diagram of a mobile device user interface showing an exemplary screen for a user to input a comment related to a playlist;

FIG. 11 is a block diagram illustrating one example configuration for a social media system and application wherein media is retrieved by, or sent to, a mobile device;

FIG. 12 shows a seventh diagram of a mobile device user interface showing an exemplary timeline list of a social media application;

FIG. 13 shows an eighth diagram of a mobile device user interface showing an exemplary 'Invite Friend' screen of a social media application;

FIG. 14 is a block diagram illustrating one example configuration for a social media system and application including details of a social media search;

FIG. 15 is a block diagram illustrating one example configuration for a social media system and application including details of a social media shuffle and a social media radio station;

FIG. 16 is a ninth diagram of a mobile device user interface showing an exemplary catalog homepage of a social media application providing social media radio station functionality;

FIG. 17 is tenth diagram of a mobile device user interface showing an exemplary list of categories of media providing social media radio station functionality;

FIG. 18 is a diagram of a mobile device user interface showing an exemplary catalog homepage of a social media application;

FIG. 19 is a second diagram of a mobile device user interface showing an exemplary tastemaker list page of a social media application;

FIG. 20 is a third diagram of a mobile device user interface showing an exemplary tastemaker homepage of a tastemaker of a social media application;

FIG. 21 shows a fourth diagram of a mobile device user interface showing an exemplary biography of a tastemaker of a social media application;

FIG. 22 shows a fifth diagram of a mobile device user interface showing an exemplary "Become a Fan" operation result screen of a social media application;

FIG. 23 shows a sixth diagram of a mobile device user interface showing another exemplary homepage for a tastemaker of a social media application;

FIG. 24 shows a seventh diagram of a mobile device user interface showing an exemplary tastemaker homepage of a social media application;

FIG. 25 shows an eighth diagram of a mobile device user interface showing an exemplary preview notification dialog screen of a social media application;

FIG. 26 is a block diagram illustrating one example configuration for a social media system and application wherein media is retrieved by, or sent to, a mobile device; and

FIG. 27 is a flow chart illustrating example computer executable operations for performing social media shuffle operations.

FIG. 28 is a flow chart illustrating example computer executable operations for facilitating an exchange of social media shuffle coordination message during a shuffle session.

FIG. 29 is a block diagram of an example configuration for a mobile device.

### DETAILED DESCRIPTION OF THE DRAWINGS

It will be appreciated that for simplicity and clarity of illustration, where considered appropriate, reference numerals may be repeated among the figures to indicate corresponding or analogous elements. In addition, numerous specific details are set forth in order to provide a thorough understanding of the examples described herein. However, it will be understood by those of ordinary skill in the art that the examples described herein may be practised without these specific details. In other instances, well-known methods, procedures and components have not been described in detail so as not to obscure the examples described herein. Also, the description is not to be considered as limiting the scope of the examples described herein.

In one aspect there is provided a method for social media shuffling comprising: detecting an actuation of a social media shuffle element; sending a social media shuffle message containing an indication of the social media shuffle element; and receiving a social media shuffle list in response to the sent social media shuffle message, the social media shuffle list comprising one or more remotely available media information and media items.

In another aspect, there is provided a method for social media shuffling comprising: detecting an actuation of a social media shuffle element; sending a social media shuffle message containing an indication of the social media shuffle element; commencing a social media shuffle operation session subsequent to the sending of the social media shuffle message, the social media shuffle operation comprising receiving one or more remotely available media information and media items; and sending a social media shuffle session coordination message during the social media shuffle operation session.

In yet another aspect, there is provided a method for social media shuffling comprising: receiving a social media shuffle message containing an indication of a social media shuffle element; and sending a message representing a social media shuffle list of media information and media items based at least in part on the social media shuffle element, the media information and media items being located in multiple sources.

In yet another aspect, there is provided a method for social media shuffling comprising: receiving a social media shuffle message containing an indication of a social media shuffle element; and coordinating a social media shuffle operation session in response to the received social media shuffle message.

Although the principles discussed below are applicable to any electronic communication device, examples will be provided for a mobile communication device, which is one of many types of electronic communication devices.

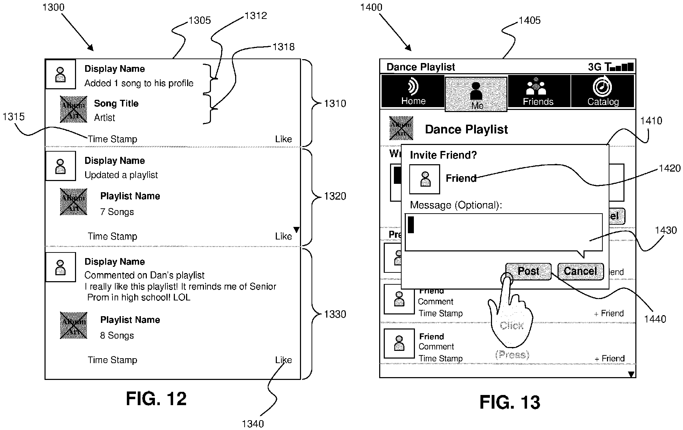

For clarity in the description below, mobile communication devices may be commonly referred to as "mobile devices" for brevity. Examples of applicable mobile devices may include, without limitation, cellular phones, smart-phones, wireless organizers, pagers, personal digital assistants, computers, laptops, handheld or other wireless communication devices, wirelessly enabled notebook computers, portable gaming devices, tablet computers, or any other portable electronic device with processing and communication capabilities. Further details of a mobile device as described herein are provided in FIG. 13.

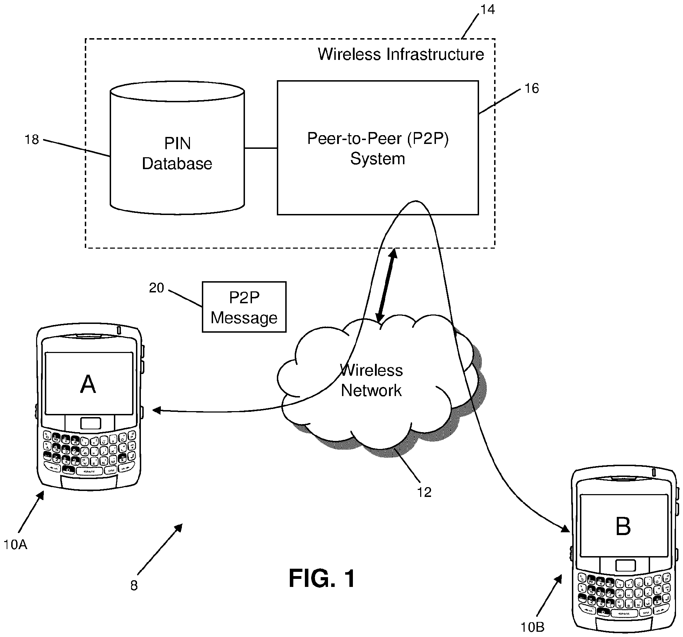

Turning to FIG. 1, an example communication system 8 is shown. The communication system 8 in this example, at least in part, enables mobile devices, commonly referred to by numeral 10 (or using numeral 10 as a prefix - e.g., mobile device A, also denoted by 10A and mobile device B, also denoted by 10B), to communicate via a peer-to-peer (P2P) system 16 via a wireless network 12. It will be appreciated that two mobile devices 10A, 10B shown in FIG. 1 are for illustrative purposes only and many other mobile devices 10 (not shown) are also capable of communicating with or within the communication system 8. It will also be appreciated that although the examples shown herein are directed to mobile communication devices, the same principles apply to other devices capable of communicating with the P2P system 16. For example, an application (not shown) hosted by a desktop computer or other "non-portable" or "non-mobile" device are also capable of communicating with other devices (e.g., including mobile devices 10) using the P2P system 16.

The P2P system 16 is, in this example, a component of a wireless infrastructure 14 associated with the wireless network 12. The wireless infrastructure 14 in this example comprises, in addition to the P2P system 16, and among other things not shown for simplicity, a personal identification number (PIN) database 18. The PIN database 18 in this example is used to store one or more PINs associated with particular mobile devices 10, whether they are subscribers to a service provided by the wireless infrastructure 14 or otherwise. PIN's are one example of an identifier of a mobile device, and other examples, such as a user identifier, a device identifier, or any other identifier capable of identifying a particular mobile device or user of a particular mobile device.

Mobile device 10A communicates with mobile device 10B and vice versa via P2P system 16, in order to perform P2P messaging or to otherwise exchange P2P-based communications, as will be explained in greater detail below. For ease of explanation, in the following examples, any P2P-based communication may also be referred to as a P2P message 20 as shown in FIG. 1.

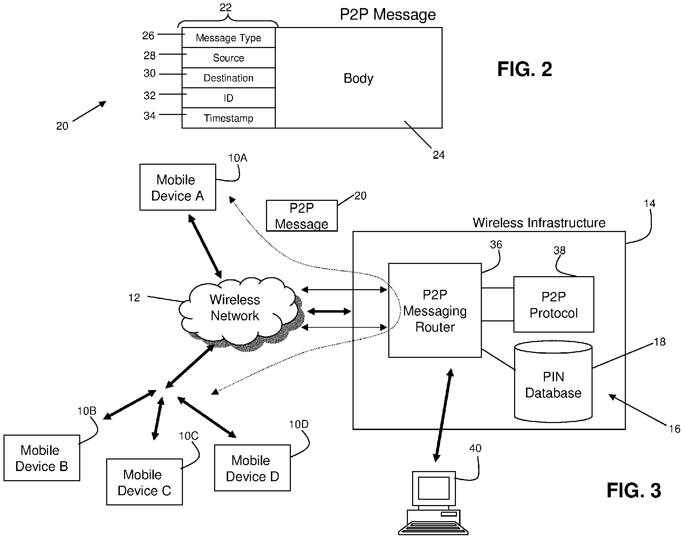

An example P2P message 20 is shown in greater detail in FIG. 2, and has a format that is suitable for a PIN-to-PIN based system. In a typical P2P protocol 38 (see also FIG. 3), each P2P message 20 has associated therewith a source corresponding to the mobile device 10 which has sent the P2P message 20 and includes a destination identifying the one or more intended recipients. Each P2P message 20 in this example comprises a body 24, which contains the content for the P2P message 20 (e.g., text or other data), and a header 22, which contains various fields used for transmitting and processing each P2P message 20. In this example, the header 22 includes a message type field 26 to specify the type of transmission (e.g. chat, registration, block, presence, etc.), a source field 28 to specify the device address for the sender, a destination field 30 to specify the device address(es) for the one or more intended recipients, an ID field 32 to identify the corresponding P2P application 44 and a timestamp field 34 to indicate the time (and if desired, the date) at which the P2P message 20 was sent by the designated sender.

It can be appreciated that in this example, the ID field 32 can be used to specify the application ID to identify a P2P application 44 on the mobile device 10. Where the P2P application 44 relates to, for example, an instant messaging (IM) system, the message type field 26 can also be used to designate an IM communication, and the ID field 32 would then correspond to a conversation ID, i.e. a conversation thread the message 20 corresponds to (e.g. such that each message 20 is identified by the conversation in which it was sent). Where the P2P application 44 relates to, for example, a social media system, the message type field 26 can also be used to designate a social media communication.

It will be appreciated that other information or attributes may be included in the P2P message 20, such as an application details field (not shown) to provide application-specific information such as the version and capabilities of the application.

Turning now to FIG. 3, a configuration is shown that is suitable for a user of mobile device A, hereafter referred to as mobile device 10A, to conduct a P2P communication (e.g., instant messaging) with buddies included in a contact list (not shown). It can be seen in FIG. 3 that the P2P system 16 is incorporated into the wireless infrastructure 14 of the wireless network 12. The P2P system 16 can utilize any suitable P2P protocol 38 operated by a P2P router 36, in this example as part of the wireless infrastructure 14. It can be appreciated however that a stand-alone P2P configuration (i.e., that does not rely on the wireless infrastructure 14 - not shown) may equally apply to the principles herein. The example configuration shown in FIG. 3 is particularly suitable for implementing a PIN-based messaging system. As can be seen, the P2P messaging router 36 also enables mobile devices 10 to communicate with desktop computers 40 thus facilitating, for example, communications such as instant messaging (IM) between mobile applications and desktop applications on the desktop computer 40.

In the example illustrated in FIG. 3, a P2P-based messaging system such as a PIN-based messaging system can be implemented using a router-based communication infrastructure, such as one that provides email, SMS, voice, Internet and other communications. Particularly suitable for hosting the P2P messaging router 36, is a wireless router or server used in systems such as those that provide push-based communication services. In FIG. 3, the wireless infrastructure 14 facilitates P2P communications such as instant messaging between mobile device 10A and mobile devices for User B, User C and User D, denoted by 10B, 10C and 10D respectively using the P2P messaging router 36. It will be appreciated that the number of users participating in the example shown in FIG. 3 is for illustrative purposes only. P2P messaging, such as IM, is provided by an associated application stored on each mobile device 10A - 10D which can be initiated, for example, by highlighting and selecting an icon from a display, as is well known in the art. The P2P messaging router 36 routes messages between the mobile devices 10A-10D according to the P2P protocol 38. For example, the P2P protocol may define a particular way in which to conduct IM or other types of messaging.

In general, in a P2P protocol 38, the sender of the P2P message 20 knows the source address of the intended recipient, e.g. a PIN. This is established when the two devices request to add each other to their respective contact or buddy lists. It can be seen in the example shown in FIG. 3 that mobile device 10A can communicate directly with any of the mobile devices 10B-10D through the P2P messaging router 36 as indicated by the short-dashed line without requiring a dedicated server for facilitating communications. In other words, the P2P messaging router 36 enables the mobile devices 10 to communicate with each other directly over the wireless infrastructure 14 in accordance with the P2P protocol 38.

When conducting a P2P session according to the example shown in FIG. 3, the mobile devices 10A-10D can communicate directly with the wireless infrastructure 14 in a client based exchange where, as noted above, an intermediate server is not required. A P2P message 20 sent by one mobile device 10 is received by the wireless infrastructure 14, which obtains the source address for the intended recipient (or recipients) from information associated with the message 20 (e.g., a data log) or from the message 20 itself. Upon obtaining the recipient's address according to the P2P protocol 38, the wireless infrastructure 14 then routes the message 20 to the recipient associated with the mobile device 10 having such address (or recipients having respective addresses). The wireless infrastructure 14 typically also provides a delivery confirmation to the original sender, which may or may not be displayed to the user. The destination device can also provide such delivery information. The wireless infrastructure 14 is capable of routing P2P messages 20 reliably and holding the P2P messages 20 until they are successfully delivered. Additionally or alternatively, if delivery cannot be made after a certain timeout period, the wireless infrastructure 14 provides a response indicating a failed delivery. The wireless infrastructure 14 may choose to expire a message 20 if a certain waiting period lapses.

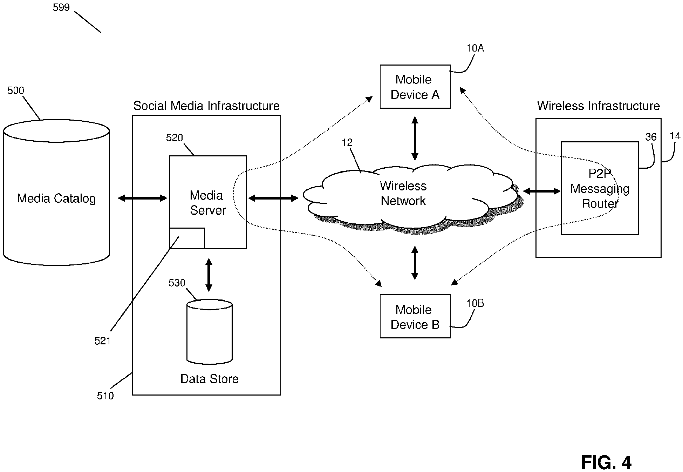

Referring now to FIG. 4, shown therein is the P2P-based messaging system of FIG. 4 including additional components comprising social media system 599. FIG. 4 includes many of the components of FIG. 3, notably mobile devices 10A and 10B, wireless network 12, wireless infrastructure 14, and P2P messaging router 36. These components operate as described in FIG. 3 to provide P2P messaging capabilities between mobile device 10A and mobile device 10B. Additional components of FIG. 3 have been omitted for clarity.

Also shown in FIG. 4 are media catalog 500, social media infrastructure 510, media server 520 and data store 530. Mobile devices 10A and 10B communicate with media server 520 using known messaging techniques, such as those described in relation to FIG. 3, or any messaging technique, such as IP based messaging or other communication protocols and standards.

The exemplary social media system 599 shown in FIG. 4 allows users of mobile devices to enjoy media and to share the experience and discovery of media with their friends. Social media system 599 provides users with access to media in a remote catalog, allowing them to enjoy allotted amounts of media pursuant to a subscription with social media system 599. In addition, users are able to experience many social features, such as sharing media with friends, commenting on their friends' media, making new friends through shared preferences and many other social features.

Social media network 599 comprises many users that each has a social media user account and social media profile. Each user is allotted a pre-set amount of media that they are able to select and access at any given time. For example, each user of social media network is restricted to a limit of 50 media items that they select for inclusion in their profile at any one time. Users are able to change a portion of their allotted media on a regular basis, such as 50% of their media each month. Users are also able to access additional media through relationships with friends. Users are allowed to access the media items of their friends' profiles in addition to their own allotted pre-set amount. In this manner, building friendships provides a user with access to more media. In addition to sharing media, friends are able to comment on media, chat about media with each other, follow celebrity users of social media network 599, and discover and follow media producers, such as new bands or artists. Users of social media network 599 are also able to create, update and share playlists of their media.

Social media network 599 also provides economic security for media rights owners by ensuring that media is properly licensed and paid for, and that media sharing is done according to established and agreed to rules.

Social media network 599 utilizes media catalog 500 which stores and provides access to stored media items. Media catalog 500 is a repository of digital media and comprises a cloud of networked storage means, a database, a hard drive, a flash drive, a tape drive or any other suitable mechanism for storing digital media and providing access to digital media. Media catalog 500 stores any type of media, including music, videos, electronic books, video games and pictures. Media catalog 500 stores media in a manner that allows for the retrieval of media using suitable identifying information about the media. Identifying information of a particular media includes any information that is operable to uniquely identify the particular media, such as title, author, composer, artist, album, a hash representation of the media, a unique identifier assigned to the media, the digital media itself, a combination of these enumerated information types, or any other information capable of identifying a particular media stored in media catalog 500.

Social media infrastructure 510 comprises components that operate social media system 599. Mobile device 10A communicates with social media infrastructure 510 by sending and receiving messages. Social media infrastructure is integral to wireless infrastructure 14 or P2P messaging router 36, or is a standalone system operable to communicate with wireless infrastructure 14 and mobile device 10A using, for example, the internet or a wireless network. Social media infrastructure 510 comprises media server 520 and data store 530 and communicates with media catalog 500.

Media server 520 is a computing device capable of sending and receiving messages over, for example, a network, a wireless network and the internet. Media server 520 includes a processor (not shown) that operates to execute instructions for social media system functionality stored in computer readable medium 521. The instructions stored in computer readable medium 521 operate to execute the functionality of media server 520 described herein, including social media search functionality, social media shuffle functionality and social media radio station functionality.

Media server 520 enables and coordinates social media system 599. Media server 520 sends messages to mobile device 10A and receives messages from mobile device 10A. Media server 520 responds to queries and requests from mobile device 10A as well as provides social media functionality, including programming interfaces, for accessing social media functionality. Media server 520 coordinates social media activity amongst a plurality of social media user accounts and facilitates a social media system and application. Media server 520 communicates with media catalog 500 to retrieve media, identify media and provide information about media stored in media catalog 500, as well as to retrieve and forward specific media to mobile device 10A where appropriate.

Media server 520 provides access to media catalog 500 for mobile device 10A and it also stores information about mobile device 10A (or about a user of mobile device 10A). Media server 520 stores information in data store 530. The stored information includes profile information about each of the users of the social media system and application. Profile information includes media information, friend information, tastemaker information, update information, configuration information and account information.

Media server 520 maintains social media profile information (or "a social media profile") in data store 530 in relation to each of a plurality of users of social media system 599. The plurality of users are each associated with a mobile device 10 and each have a user account comprising a social media profile at media server 520.

Media server 520 maintains and stores information for each user account as social media profile information. Social media profile information includes media information, friend information, update information, configuration information and account information.

Media information includes a set of information about a plurality of media. Media information may include a list of identifiers, a list of media, a list of titles or any other suitable set of information that identifies a set of media items. Media information may also include information about particular media in the set of media such as pictures, album cover photos, album titles, creation dates and other information about individual pieces of media. Media information further comprises a social media playlist. A social media playlist is a current set of media that is accessible to a user account according to the allotted amounts and sharing functionality described herein. A social media playlist may include ordered or unordered media information. A user may create traditional playlists out of the media contained in their social media playlist. A traditional playlist is a listing of individual pieces of media selected by a user.

Friend information includes a set of information about a plurality of friends for a user account. Friend information includes a list of identifiers, a list of names, a list of handles or any other suitable information that identifies a set of friends. Friend information may also include information about particular friends in the set of friends, including pictures, names, status, number of comments on media, number of media interactions (e.g., listens, ratings etc.) and the like. Friends include other users of social media system 599. Friend information further comprises a social media friend list. A social media friend list is a current set of friends for a given user account with which media may be shared as described herein.

Update information includes timeline information comprising comment information, event information, tastemaker information, and chat information. A user account's update information is frequently updated with information about events that are of interest to a particular user account. The interests of a particular user account are determined using a user's media information, friend information, and tastemaker information.

Configuration information includes information about the preferences and options selected for a user account.

Account information includes information about a particular user account. Account information includes a user name, a password, a user identifier, user contact information (such as phone number, a street address, an email address, etc.), payment information and the like.

Social media profile information and social media tastemaker profile information is stored in data store 530. Data store 530 is any suitable data storage mechanism, such as, for example, a database or a hard drive and may be integral to media server 520 or separate.

Portions of each user account's social media profile information are shared within social media system 599. For example, social media profile information is shared amongst friends, as indicated by the friend information of each social profile's friend information. The sharing of social media profile information amongst friends allows the users of social media system 599 to form a community of users that are able to interact electronically and to socialize around digital media.

Social media system 599 includes a variety of features that are enabled through a multitude of social operations. These social operations allow users to enjoy media, to share media with friends, and to interact with friends and with other members of social media system 599. Exemplary operations that support these social operations are described below and include a social media registration operation, a social media playlist creation operation, a social media friend list creation operation, a social media playlist update operation and a social media retrieve operation.

In an exemplary social media registration operation, mobile device 10A sends a message including registration information to media server 520 to establish a new social media user account. Registration information is input to mobile device 10A by, for example, user input of information. Registration information includes information required to set up a social media user account. Such information includes a user name, a user number, a user identifier, payment information, information about friends, a selection or combination of these pieces of information, or any other information required to create a new social media user account. Upon receipt of registration information, media server 520 validates the information, and upon a successful validation a new social media user account is created and stored in data store 530. Media server 520 responds to mobile device 10A with a message including basic social media profile information. The social media profile information includes an account identifier, default preferences, default permissions, initial media information, a selection or combination of these pieces of information, or any other information that mobile device 10A needs to know in order to successfully start using social media system 599.

In a further exemplary social media registration operation, the user of mobile device 10A changes mobile devices after having set up a social media user account, as described above. For example, the user of mobile device 10A switches to using mobile device 10B instead of mobile device 10A. In this example, a social media registration operation requires the user to enter some or all of the registration or social media profile information, or both, to switch the social media account to the new mobile device 10B. The entered information is sent to media server 520 in the manner described above. In this example, upon receipt of the entered information, media server 520 does not create a new social media user account; it updates the pre-existing social media user account to reflect the user's change from mobile device 10A to mobile device10B. To simplify the process of changing mobile devices, a unique user ID may be utilized to identify each user and provision of this unique user ID to media server 520 enables the change of mobile devices.

Once a successful social media registration operation is complete, a user populates their social media profile information with a social media playlist and with a social media friend list.

A social media playlist is a current set of media that is accessible to a user in accordance with the alloted amount described above. An exemplary social media playlist creation operation includes: 1) mobile device 10A receives media information; and 2) media is selected from the received media information to form a new social media playlist.

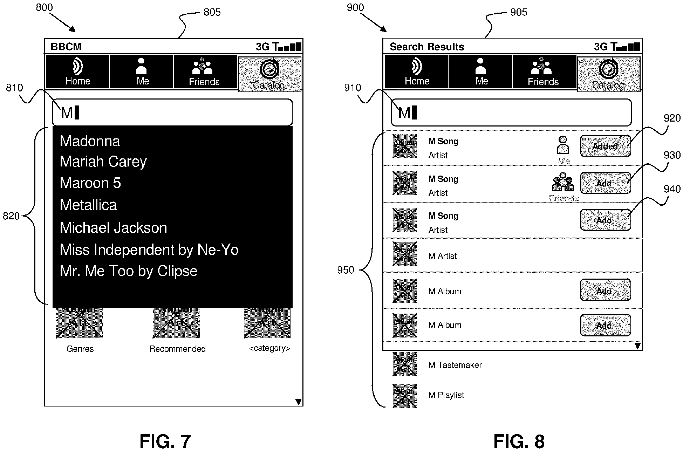

Media information is received at mobile device 10A from an external source, such as from media server 520, from mobile device 10B or from another source of media information. Mobile device 10A receives media information in response to a query, as input from a user, or in response to a successful registration operation. Media information may be a list of media that corresponds to a search query (as described in FIGS. 7 and 8) or it may be a catalog of media information that can be browsed by a user.

The selection of some or all of the media described in the received media information is accomplished either with user input or automatically.

Where the selection of media is accomplished with user input, the input comprises searching and selecting, tagging media or browsing and selecting items in a catalog of media information.

In the case of a user search, search parameters are input by the user and a search query is sent to media server 520 to fetch search results. After receiving search results from media server 520, the user selects items from the search results and the selected items are added to the user's social media playlist.

In the case of a user tagging media that they enjoy, the user actuates a tag button to select the media. For example, while listening to a preview of a song, or while listening to a public music feed, the user actuates a tag button which signifies that the current media item should be selected for inclusion in the user's social media playlist.

In the case of a user browsing a catalog, the catalog is retrieved from media server 520 for display and browsing at mobile device 10A. Upon locating a media item of interest while browsing, the user may select the item for inclusion in their social media playlist.

In each of these three cases, the result is a selection by the user of at least a portion of the media information. Selection of media information includes an identification of a particular media of the media information, an identification of a genre of media, an identification of a preferred source of media or other preference information. Selection may be accomplished using well known user interface techniques, such as highlighting and selecting, or touching a displayed item, to select items. An example application screen for selecting items from a list is shown generally in FIG. 8.

Where the selection of media is accomplished automatically, mobile device 10A is programmed to select at least a portion of the media information. Automatic selection of media information is based on heuristic information about a user of mobile device 10A, for example, by searching media stored at mobile device 10A or searching other information stored at mobile device 10A to predict the preferred media that the user might enjoy.

Upon appropriate selection of media information, a social media playlist is created which includes the selected media information. The newly created social media playlist is sent to media server 520 for storage and updating. In response, media server 520 sends at least some of the media identified in the media information portion of the social media playlist to mobile device 10A so that the media can be enjoyed at mobile device 10A. In some examples, media server 520 only sends the media to mobile device 10A if mobile device 10A is in a suitable communication network, such as a WiFi network, or some other high-bandwidth/low-cost network.

Users are able to configure when and how full media items are downloaded. For example, a user may choose to not store media locally, but instead only enjoy the media as it is streamed. By way of another example, a user may choose to prioritize which media is store locally according to, for example, which media or playlist has been enjoyed the most times by the user. A preference or configuration operation is provided to modify these and other settings.

A social media friend list is a set of friend information about a current set of friends of a user. In an exemplary social media friend list creation operation: 1) mobile device 10A receives friend information; and 2) friends are selected from the received friend information to form a new social media friend list.

Mobile device 10A receives friend information as an input from a user, in response to a query, or from a storage means at mobile device 10A that includes contact, address or friend information. Mobile device 10A uses the received friend information to create a list of friends for their social media profile. Social media friend list creation is accomplished via selection of some or all of the received friend information.

Selection of some or all of the friend information is accomplished through manual user input or is accomplished automatically by operation of mobile device 10A.

Where a social media friend list is created pursuant to user input, the input identifies a selection of at least a portion of the friend information. Selection of friend information includes manual input of friend identifiers, or the selection of pre-existing friends present in a stored contact list, or other address book source. Selection is accomplished using well known user interface techniques, such as highlighting and selecting or selection using a touch sensitive display.

Where a friend list is created automatically, mobile device 10A is programmed to select at least a portion of the friend information. Automatic selection of friend information examines a stored contact list, or other address book source, and selects contacts or addresses that have a social media user account. The selection of friends uses information that is stored at mobile device 10A or uses remote information sources, such as media server 520.

Pursuant to an appropriate selection of friend information, a social media friend list is created which includes the selected friend information. The newly created social media friend list is sent to media server 520 for storage and updating. Selected friends are notified that they have been selected as a friend for the user account of mobile device 10A. Notification includes an identification of the user who has added the friend.

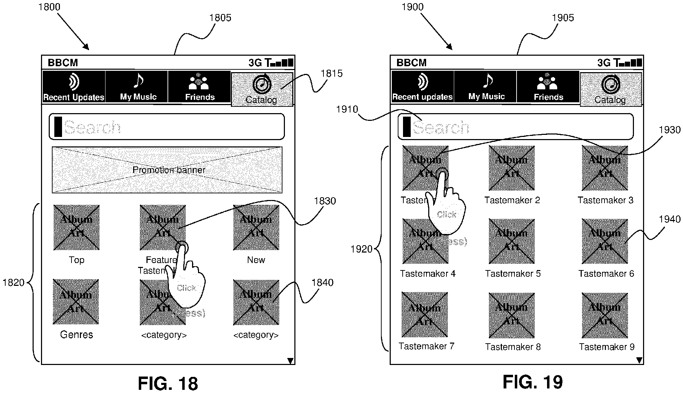

In addition, a contact list or address book (such as enabled by PIM module 142 of FIG. 18) is updated to reflect relationships of friendship. Users are able to visually ascertain which entries in their contact list or address book are members of the social media system 599 by, for example, a graphical representation that is shown in association with the contact list or address book entry when displayed. In a similar manner, other users of social media system 599 who are in a user's contact list or address book, but who are not currently social media friends of the user, are identified as members of social media system 599 by a graphical representation that is shown in association with the contact list or address book entry when displayed. Suitable messages and updates are sent and received between mobile device 10A and media server 520 to enable this functionality.

Once populated with an initial social media playlist and an initial social media friend list, a social media profile is updated frequently. Updates include updating the social media friend list, the social media playlist as well as updating update information. Updates to a social media friend list include adding, removing and changing friends. Updates to a social media playlist include adding, removing and changing media. Updates to update information include adding, removing and changing updates.

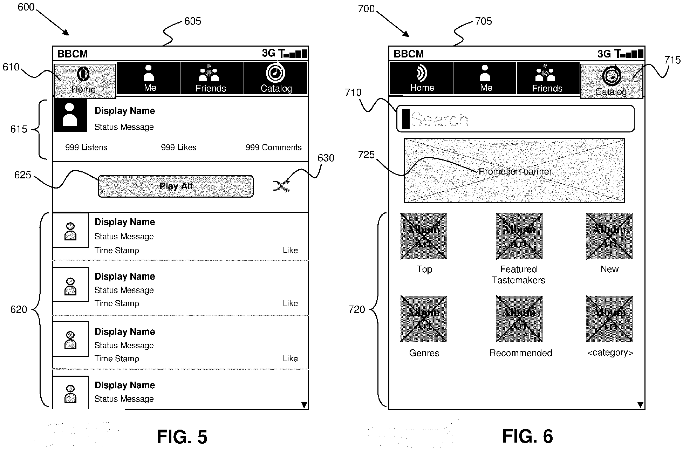

By way of example, a display screen 600 of an example of mobile device 10A is shown in FIG. 5. Shown in exemplary display screen 600 is homepage 610 of a social media application 605 executing at mobile device 10A. Exemplary homepage 610 includes user account information bar 615 which includes account information and update information for the user account associated with mobile device 10A. In the exemplary display shown in FIG. 5, account information bar 615 includes a user account display name, a user account status message, a user account picture and user account statistics, such as a count of listens, a count of likes and a count of comments. Exemplary homepage 610 includes timeline portion 620 that displays information about recent updates that are relevant to the user account, such as friend updates, updates about friends, comments from friends and the like. Also shown on exemplary homepage 610 is play all button 625 and shuffle button 630. Play all button 625 is selectable to play all of the media currently in the user account's social media playlist. Shuffle button 630 is selectable to play all of the media currently in the user account's social media playlist in random order. Further items may be included in homepage 610 and the items included in homepage 610 may be altered or moved or removed altogether.

Users of social media system 599 are able to see their friends' homepage, or another similar display screen that includes much of the same information as homepage 610. When displayed on a friend's homepage, play all button 625 and shuffle button 630 operate to retrieve, from the friend or from media server 520, the friend's media and to play the media.

Updates for a social media profile are reflected in timeline portion 620 and include indications about events that are of relevance to the social media profile. Relevant events include the addition of friends, commentary from friends, changes to the social playlists of friends, the creation of social playlists by friends, a friend becoming a fan of someone, notifications from third parties and other such events. Updates occur as social media update operations.

Social media update operations include user account update events and remote update events. A description and example of a user account update event operation is provided below, followed by a description and example of a remote update event operation.

A user account update event is an event that occurs at a given user account, usually at the express direction of the owner (i.e., user) of the account using mobile device 10A. In the case of a user account update event, mobile device 10A sends, or shares, an update about the event with media server 520 and with other users of media system 599, such as the user's friends. User account update events include many different events. One user account update event is the user altering their social media playlist by, for example, adding a new media or removing an existing media. Another user account update event is the user altering their social media friend list by, for example, adding a friend. Another user account update event is the user commenting on a piece of media. Yet another user account update event is the user becoming a fan of another user of social media system 599. Further examples of user account update events include the user following another user, the user liking media, the user disliking media, the user subscribing to a channel of media and the user unsubscribing from a channel of media.

In an exemplary user account update event, a user of mobile device 10A performs an action that gives rise to an event that is sent, or shared, with others as an update. The event can be any of the examples provided above, and for this example is an addition of media to the user's social media playlist. Shown generally in FIG. 6 is a display screen 700 of an example of mobile device 10A. Shown in exemplary display screen 700 is catalog homepage 715 of a social media application 705 executing at mobile device 10A. Also shown in FIG. 6 is search input field 710 which is operable to receive text input from a user according to, for example, presses of a key or touches of a touch sensitive screen. FIG. 6 also includes promotional banner space 725 to show, for example, an advertisement.

FIG. 6 further shows media set section 720 that includes a number of different media sets based, for example, on type, genre, artist or on stature. The media sets of media set section 720 can be selected by a user to shortcut the operation of adding new media. Upon selection of one of the media sets the user is taken via shortcut directly to a list of media corresponding to the selected media sets and takes a user to the application screen shown in FIG. 8.

To initiate a user account update event of adding a new media, a user either types text into search input field 710 or selects one of the media sets of media set section 720.

In the case of adding new media via manual entry of text into search input field 710, text is input into a search input field upon detection of user input by appropriate subsystems of mobile device 10A, such as a keyboard or touch-sensitive display. As shown in social media search screen 805 of FIG. 7, search input field 810 contains the input letter 'M'. Also shown in FIG. 7 is immediate search result list 820 which includes a listing of media information that corresponds to the input 'M'. Immediate search result list 820 contains media information found either locally at mobile device 10A, or found via communication with external components such as media server 520.

Immediate search result list 820 contains media information that corresponds to the input 'M' in a number of types. As shown in FIG. 7, immediate search result list 820 includes songs whose titles begin with 'M', artists whose name begins with 'M', bands whose name begins with 'M' as well as album names that begin with 'M'. Other types of media information may appear in immediate search result list.

A user of mobile device 10A can select an individual media information item from immediate search result list 120. Selecting an individual media information item operates in the same shortcut manner described above and takes the user, via shortcut, directly to a list of media corresponding to the selected individual media information, as shown in the application screen shown in FIG. 8.

If user completes entry of a search term into search input field 810 by an actuation of an entry button, such as through an actuation of an enter button or 'Go' button, a search is conducted of one or both of local media information and remote media information and a search result list is shown, as depicted in FIG. 8. A search of remote media information includes a search conducted by media server 520 of media catalog 500.

FIG. 8 shows application screen 905 of a social media application. Application screen 905 shows list of media information items 950 that correspond to either a selection of media set section 720, a selection of an item of immediate search result list 820 or through actuation of an entry button upon completion of entry of the search term. The list of media information items 950 contains items that correspond to how the user arrived at the application screen of FIG. 8, such as the results of a search of internal and external media sources.

From application screen 905 a user may select individual items, such as a song, a movie, a playlist or an album, from list of media information items 950 for addition to their social media playlist. Application screen 905 shows items of media labelled with an album picture, a song title and an artist of songs, but it is to be appreciated that other indications could be included based on the media type, such as author, publisher, actor or any other relevant information.

Application screen 905 shows that one item of list of media information items 950 is already present in the user's social media playlist, as represented by item 920 which shows an exemplary graphical representation of 'Me'. Item 930 of application screen 905 indicates that item 930 is already in a social media playlist of one or more of the user's friends. Item 930 includes a graphical representation indicating that a friend has the media information item in their playlist. Item 930 includes an 'Add' button which can be actuated by the user to add the media item referenced by item 930 to their own social media playlist, possibly without counting the media item referenced by item 930 towards the user's allotment of media. Item 940 of application screen 905 indicates that the media item referenced by item 940 is not in the user's social media playlist and is not in a friend's social media playlist. The media item referenced by item 940 is stored in media catalog 500. Other graphical representations, such as icons and images may also or alternatively be shown in application screen 905.

Upon actuation of one of the 'Add' buttons of item 930 and item 940, a social media playlist update operation is executed to update the user's social media playlist. This update includes modifying the social media playlist stored at mobile device 10A. The update also includes sharing information about the update with one or more recipients, including media server 520 and other users of social media system 599, such as the user's friends or other users. Sharing information includes sending one or more messages to the one or more recipients, possibly indirectly via message server 520. The messages include information describing the added media item.

Subsequent to an actuation of the 'Add' button, the media referenced by the media information that is represented by an item in the list of media information 950 is retrieved for use at mobile device 10A. Retrieval may include adding media to the social media playlist for later download or streaming, downloading the media from media server 520, receiving the media in response to a sent update message, retrieving further media information for storage to allow mobile device 10A to easily retrieve the entire media item later, and storing the media information for later retrieval, possibly with an indication that the media has been added by the user for later retrieval. Later retrieval may be initiated, for example, upon user actuation of a representation of the media information in a media application of mobile device 10A.

Pursuant to completion of the exemplary social media update operation described herein, mobile device 10A has a copy of media for enjoyment at mobile device 10A. Alternatively, the media may be stored at media server 520 or on a friend's device and streamed to mobile device 10A upon request to play. Other users, including the user's friends, are aware that the user has added the new media to their social media playlist because of the shared update.

Additional processing may be executed at mobile device 10A or at social media server 520 to ensure that the user is allowed to add the selected media item to their social playlist. This may be accomplished by verifying allotment use by the user as well as access permissions.

Remote account events are events that occur for a user's friends, or some other event that occurs without user input, for example, and announcement or the release of new media. In the case of a remote account event, mobile device 10A receives an update about the event from media server 520 or from another user of media system 599. Remote account events include many different events including a friend adding or removing media from their social media playlist, a friend commenting on a piece of media, as well as a user of social media system 599 creating or changing any of a social media playlist, a category of media, a station of media, a set of media, a media event, an announcement, a media channel, or any other event relating to media system 599.

Remote account events are the same as user account events except that they are caused by a different user. Remote account events serve to keep the user informed about events occurring within social media system 599.

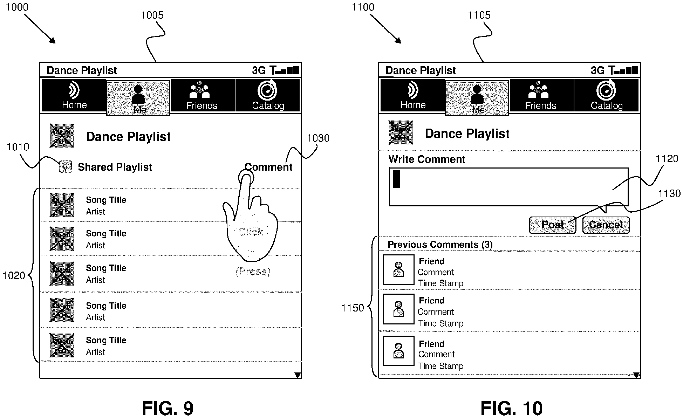

An example of a remote update event operation is a friend of the user of mobile device 10A commenting on an item of media that is available within social media system 599. FIGS. 9 and 10 show exemplary application screens wherein a user of, for example, mobile device 10B comments on media.

FIG. 9 shows application screen 1005 of a social media application. Application screen 1005 shows a playlist view that is shared with the friends of user of mobile device 10B, as indicated by checked shared playlist box 1010. The playlist shown on application screen 1005 includes list of media items 1020 that belong to the playlist titled 'Dance Playlist'. Upon user actuation of 'Comment' icon 1030 (shown as a user touch of a touch sensitive display), a further application screen 1105 (of FIG. 10) is displayed. Icon 1030 may be displayed as another graphical item, such as an icon or a menu item, and may be associated with individual items of the playlist.

User actuation of shared playlist box 1010 toggles whether the playlist is shared with friends or is not shared with friends. A shared playlist may be seen and used by friends. In addition to a shared playlist box 1010 that shares or does not share a playlist with all friends, granular sharing capabilities are provided whereby a user may select to share a playlist with a limited set of their friends. Where a user specifically shares a playlist with a friend, a message with a link is sent to the friend to notify them of the newly shared playlist. It is to be understood that similar sharing functionality is also provided for individual media items, albums and even entire profiles.

Application screen 1105 of FIG. 10 provides functionality for a user to input comment related to the playlist shown in FIG. 9. Application screen 1105 includes comment input field 1120 which accepts input from a user, such as textual input or other multimedia input, including pictures or audio or both. Once a comment has been input by a user, the user actuates 'Post' button 1130 to post, or share, the comment with other users of social media system 599. An actuation of 'Post' button 1130 initiates an update event operation which, from the perspective of a user of mobile device 10A is a remote update event operation.

The remote update event information arrives at mobile device 10A from either media server 520, or directly from mobile device 10B. Upon receipt of the remote update event information, a representation of the information is stored at mobile device 10A for display, for example, in timeline portion 620 of FIG. 5. In this manner, the user of mobile device 10A is kept up to date of the comments made by their friends.

In addition to the comment functionality provided in application screen 1105, it is also possible for users to engage in ongoing chats with one or more friends. In a chat, users exchange messages in a conversation as is well known. A chat widget, or other messaging application may be utilized to provide chatting functionality.

Application screen 1105 also includes timeline of previous comments 1150 which displays historical comments.

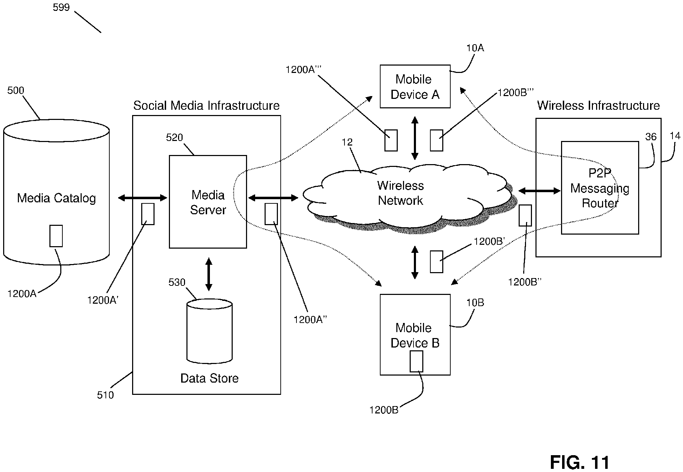

FIG. 11 shows an exemplary social media retrieve operation which retrieves a media item for use at mobile 10A. FIG. 11 includes the components of social media system 599 shown in FIG. 4.

As shown in FIG. 11, the media item may originate from media server 520 as media 1200A or from mobile device 10B as media 1200B depending on the configuration of social media system 599.

In a first case, mobile device 10A requests, retrieves or receives media 1200A from media server 520. In this first case, the social media retrieve operation is initiated either subsequent to an account registration operation as described above, or as part of an update operation as described above where, for example, a user of mobile device 10A actuates 'Add' button 930 or 'Add' button 940 of FIG. 8. In either case, media server 520 ascertains that media 1200A should be sent to mobile device 10A. At a first step, media server 520 retrieves media 1200A from media catalog 500 or otherwise makes it known to media catalog 500 that media 1200A is to be sent to mobile device 10A. A copy of media 1200A is retrieved from media catalog 500 as media 1200A'. Upon receipt of media 1200A', media server 520 forwards or sends the media onto to mobile device 10A via wireless network 12, first as media 1200A" and then as media 1200A'''. Media 1200''' is sent from the wireless network to mobile device 10A where it arrives for use by the user.

In a second case, mobile device 10A requests, retrieves or receives media 1200B from mobile device 10B. In this second case, the social media retrieve operation is initiated as part of an update operation as described above where, for example, a user of mobile device 10A actuates 'Add' button 930 of FIG. 8. Initially, a copy of media 1200B is stored at mobile device 10B. Mobile device 10B determines that mobile device 10A has requested media 1200B, or determines from a received update message that mobile device 10A desires a copy of media 1200B. In either case, mobile device 10B sends a copy of media 1200B to mobile device 10A via mobile network 12, initially as media 1200'. Media 1200B may be sent to mobile device 10A via wireless infrastructure 14, which receives the media as media 1200B". Where the media passes through wireless infrastructure 14, wireless infrastructure 14 sends media 1200B''' to mobile device 10A via wireless network 12. Alternatively, media 1200B may be sent directly to mobile device 10A via wireless network 12, wherein media 1200B''' arrives at mobile device 10A.

In a third case, mobile device 10A and mobile device 10B are friends. A user of mobile device 10B is currently enjoying a media item. A message reflecting this current status of the social media application is sent from mobile device 10B to mobile device 10A. Upon receipt of the current status of mobile device 10B, mobile device 10A displays a representation of the current status of mobile device 10B, such as, for example, "User B is listening to Song 123". Upon selection or actuation of the displayed representation, mobile device 10A requests or retrieves the media item, either from media server 520 or from mobile device 10B using the techniques described above.

In any case, pursuant to the social media retrieve operation shown in FIG. 11, mobile device 10A has a copy of media 1200 that can be enjoyed by a user of mobile device 10A through the use of an appropriate media application resident at mobile device 10A.

In another example, media 1200A and 1200B are streamed to mobile device 10A wherein the media is played substantially as it is received at mobile device 10A.

In another example, only a portion of media 1200A and 1200B are sent to mobile device 10A.

In yet another example, media server 520 verifies account information prior to sending media 1200A to mobile device 10A. Alternatively, mobile device 10B seeks permission from media server 520 prior to sending media 1200B to mobile device 10A.

FIG. 12 shows application screen 1305 of a social media application. Application screen 1305 shows a timeline list of update information relevant to a user of mobile device 10A. The timeline list of application screen 1305 includes three separate update information entries, 1310, 1320 and 1330. As further updates are received or made, additional update information entries are included in application screen 1305. Additional update information entries may cause the timeline list to grow too large for display on a single display of mobile device 10A. In such cases, a user of mobile device 10A is able to scroll through the list using well known techniques. Additionally, old update information entries may be removed from the list. Alternatively, update information entries that are all related to the same thing (such as the same song or playlist for example) may be grouped together to reduce the size needed to display the entire thread of updates. By way of example, if 5 friends each have update information entries indicating that they like the same media, these entries may be grouped in one entry represented by a grouped entry, such as '5 of your friends like this media' for example.

Update information entry 1310 indicates that a friend of the user of mobile device 10A has added one song to their social media profile. Update information entry 1310 includes update information about the friend and what they have done as actor information element 1312. Actor information element 1312 includes the name of the friend who has added the song, a graphical representation of the friend (such as a picture) and a brief summary of the activity that resulted in the update. Actor information element 1312 includes additional or reduced information in other examples.

Update information entry 1310 further includes media information element 1318 which describes the media that is the subject of the update. Media information element 1318 includes an image related to the media involved in the update, a title of the media and an artist name. Further or less information may be included in media information element 1318 depending on the type of update.

Update information entry also include a timestamp element 1315 which reflects when the update occurred.

Update information entry 1320 indicates that a friend has updated a playlist. The media information element of update information entry 1320 includes an image associated with the playlist that has been updated, the name of the playlist as well as a count of the songs in the playlist.

Update information entry 1330 indicates that a friend has commented on a playlist. The actor information element of update information entry 1330 includes the text of the friend's comment.

'Like' button 1340 is included as part of an update information entry to allow a user of mobile device 10A to automatically comment on the update information entry by expressing that they like the update. Actuation of 'Like' button 1340 causes execution of a modified update event operation similar to the update event operation described above in relation to FIG. 10. The modified update event operation requires no further input from the user of mobile device 10A and shares that the user likes the update with other users of social media system 599, as described above, without requiring further input form the user of mobile device 10A.

Actor information elements, such as actor information element 1312, and media information elements, such as media information element 1318 can be actuated by a user of mobile device 10A by, for example, selecting an image associated with the element or the element itself. Upon actuation of an actor information element or a media information element, the social media application performs additional contextual operations. For example, actuating an actor information element causes social media information application to display a profile page of the subject actor of the element. As another example, actuating a media information element causes social media information application to display information about the media, including a media page, a media album page, a playlist page, a purchase page, or any other page related to the media.

Further exemplary contextual operations are provided. The specific contextual operations for an actor information element or media information element depend on the content of the information element. For example, if the information element is an update about a change to the social media profile of a user's friend, contextual operations include viewing the profile, commencing a chat with the friend, playing all of the media from the friend's profile, or adding the friend's media to user's playlist. As another example, if the information element is an update about the creation or updating of a playlist by a user's friend, contextual operations include playing the playlist. As another example, if the information element is an update about what a user's friend is listening to, contextual operations include playing what the user's friend is listening to. As yet another example, if the information element is an update about the addition of a comment by a user's friend, contextual operations include viewing or opening all related comments. As even another example, if the information element is an update about a user's friend becoming a fan of someone or something, contextual operations include an option to become a fan of the someone or something. Other types of update and contextual operation are possible as is appreciated by those skilled in the art.

Actor information elements and media information elements may be displayed in numerous applications screens of the social media application to execute the same contextual operations described above. Application screen 1305 is one example of where actor information elements and media information elements can be actuated for contextual operations, but any other application screen of the social media application having similar actor information elements or media information elements may include similar functionality.

In another example, actuation of actor information element 1312 causes the social media application to display 'Invite Friend' screen 1405 shown in FIG. 13. In such an example, the actor referred to in actor information element 1312 is not currently a friend of the user of mobile device 10A. This example situation may occur where, for example, the actor comments on a playlist that is followed by the user of mobile device 10A. As shown in FIG. 13, friend invitation dialog 1410 provides a user with the ability to easily become friends with the actor who posted the comment. Friend invitation screen 1410 includes an actor information element that includes, for example, a graphic representative of the actor, and the actor's name. Friend invitation screen also includes message input field 1430 which permits the user of mobile device 10A to include a personalised message with the invitation. To send the invitation to the actor, the user of mobile device 10A actuates 'Invite' button 1440. Upon actuation of 'Invite' button 1440, social media application causes an invitation message to be sent to at least one of media server 520 and the mobile device of the actor (for example, mobile device 10B). Upon receipt of the invitation message, the actor is able to accept or decline the invitation. If the invitation is accepted the user of mobile device 10A and the actor will enter into a friend relationship.

### Social Media Search

Social media system 599 includes a variety of features that are enabled through a multitude of social operations. These social operations allow users to enjoy media, to share media with friends, and to interact with friends and with other members of social media system 599. One exemplary operation of a social media system and application is a social media search.

A social media search executes to provide a user with a listing of media items that are relevant to search terms. Because of the distributed nature of the social media system and application a social media search may examine numerous data locations to return a comprehensive set of social media search results. The multi-formatted nature of the social media system and application (i.e., multiple formats of media and media organisation methods, such as songs, albums and playlists) requires coordination from media server 520 to achieve comprehensive social media search results.

A social media search is initiated at mobile device 10A and uses input search terms for executing a search of one or more of mobile device 10A, media server 520, media catalog 500 and mobile device 10B.

In an exemplary social media search, a user of mobile device 10A searches for media items to be added to their social media playlist. Shown generally in FIG. 6 is a display screen 700 of an example of mobile device 10A. Shown in exemplary display screen 700 is catalog homepage 715 of a social media application 705 executing at mobile device 10A. Also shown in FIG. 6 is search input field 710 which is operable to receive text input from a user according to, for example, presses of a key or touches of a touch sensitive screen. FIG. 6 also includes promotional banner space 725 to show, for example, an advertisement.

FIG. 6 further shows media set section 720 that includes a number of different media sets based, for example, on type, genre, artist or on stature. The media sets of media set section 720 can be selected by a user to shortcut the operation of adding new media. Upon selection of one of the media sets the user is taken via shortcut directly to a list of media corresponding to the selected media sets and takes a user to the application screen shown in FIG. 7.

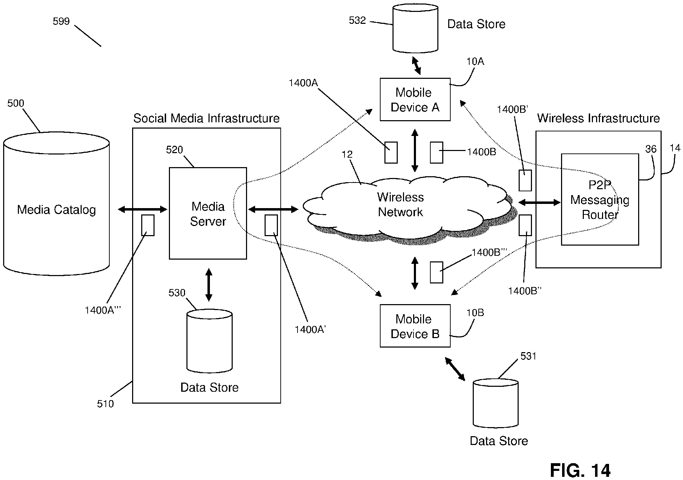

To initiate a social media search, a user types text into search input field 710. Text is input into search input field 710 upon detection of user input by appropriate subsystems of mobile device 10A, such as a keyboard or touch-sensitive display. As shown in social media search screen 805 of FIG. 7, search input field 810 contains the input letter 'M'. The input letter 'M', or any other input text is called a social media search parameter. Also shown in FIG. 7 is immediate search result list 820 which includes a listing of media information that corresponds to the input 'M'. Immediate search result list 820 contains media information found either locally at mobile device 10A, or found via communication with external components such as media server 520. Immediate search result list 820 is populated with media information pursuant to a social media search, the details of which are described in relation to FIG. 14.

Immediate search result list 820 contains media information that corresponds to the input 'M' in a number of types. As shown in FIG. 7, immediate search result list 820 includes artists whose name begins with 'M', bands whose name begins with 'M' as well as album names that begin with 'M'. Other types of media information may appear in immediate search result list.

A user of mobile device 10A can select an individual media information item from immediate search result list 120. Selecting an individual media information item operates in the same shortcut manner described above and takes the user, via shortcut, directly to a list of media corresponding to the selected individual media information, as shown in the application screen shown in FIG. 8.

If user completes entry of a search term into search input field 810 an actuation of an entry element, such as through an actuation of an enter button or 'Go' button, a social media search is conducted of one or both of local media information and remote media information and a search result list is shown, as depicted in FIG. 8. A social media search of remote media information includes a search conducted by media server 520 of media catalog 500. The details of a social media search are described below with reference to FIG. 14.

FIG. 8 shows application screen 905 of a social media application. Application screen 905 shows list of media information items 950 that correspond to either a selection of media set section 720, a selection of an item of immediate search result list 820 or through actuation of an entry button upon completion of entry of the search term. The list of media information items 950 contains items that correspond to how the user arrived at the application screen of FIG. 8, such as the results of a search of internal and external media sources.

From application screen 905 a user may select individual items, such as a song, a movie, a playlist or an album, from list of media information items 950 for addition to their social media playlist. Application screen 905 shows items of media labelled with an album picture, a song title and an artist of songs, but it is to be appreciated that other indications could be included based on the media type, such as author, publisher, actor or any other relevant information.

Application screen 905 shows that one item of list of media information items 950 is already present in the user's social media playlist, as represented by item 920 which shows an exemplary graphical representation of 'Me'. Item 930 of application screen 905 indicates that item 930 is already in a social media playlist of one or more of the user's friends. Item 930 includes a graphical representation indicating that a friend has the media information item in their playlist. Item 930 includes an 'Add' button which can be actuated by the user to add the media item referenced by item 930 to their own social media playlist, possibly without counting the media item referenced by item 930 towards the user's allotment of media. Item 940 of application screen 905 indicates that the media item referenced by item 940 is not in the user's social media playlist and is not in a friend's social media playlist. The media item referenced by item 940 is stored in media catalog 500. Other graphical representations, such as icons and images may also or alternatively be shown in application screen 905.

Upon actuation of one of the 'Add' buttons of item 930 and item 940, a social media playlist update operation is executed to update the user's social media playlist. This update includes modifying the social media playlist stored at mobile device 10A. The update also includes sharing information about the update with one or more recipients, including media server 520 and other users of social media system 599, such as the user's friends or other users. Sharing information includes sending one or more messages to the one or more recipients, possibly indirectly via message server 520. The messages include information describing the added media item.

Subsequent to an actuation of the 'Add' button, the media referenced by the media information that is represented by an item in the list of media information 950 is retrieved for use at mobile device 10A. Retrieval may include downloading the media from media server 520 or it may include receiving the media in response to a sent update message. Once retrieved, mobile device 10A has a copy of media for enjoyment at mobile device 10A. Other users, including the user's friends, are aware that the user has added the new media to their social media playlist because of a shared update.

FIG. 14 shows an exemplary social media search initiated by mobile device 10A for an immediate search result list (as shown in FIG. 7) or for a search result list (as shown in FIG. 8). The exemplary social media search locates media information and media items that correspond to the social media search parameter 'M' as entered in search input field 810 of FIG. 7.

The exemplary social media search of FIG. 14 includes a search of media information and media items stored in one or more data sources, including data store 532 of mobile device 10A, data store 531 of mobile device 10B and media catalog 500. The social media search results of the social media search include a listing of media information and media items for the media information and media items located in one or more of these data sources. The social media search results may be presented to a user of mobile device 10A for further processing, such as shown in FIG. 8.

A social media search of media information and media items stored in data store 532 of mobile device 10A is conducted local to mobile device 10A. Searching media information and media items in data stored 532 produces a listing of media information and media items that correspond to the social media search parameter 'M'. Correspondence is determined by comparing the input 'M' to one or more information elements of the media information and media items in data store 532. For example, a search of data store 532 identifies one or more media information and media items that contain the social media search parameter 'M' in their title, artist, playlist name, friend name, album name or any other identifying information of the media information or media item. Corresponding media information and media items are supplied to a results aggregator of the social media search. The results aggregator obtains the social media search results of a search of data store 532 and includes the results in a listing of results, possibly to be combined with further social media search results as described below.

A social media search of media information and media items stored in data store 531 of mobile device 10B is conducted according to one or more messages sent from mobile device 10A to either media server 520 or mobile device 10B.

In the case of one or more messages being sent from mobile device 10A to media server 520 to search data store 531, social media search message 1400A is sent from mobile device 10A to media server 520. Social media search message 1400A includes parameters indicating a social media search parameter 'M', a search source parameter (i.e., mobile device 10A) and a search destination parameter (i.e., mobile device 10B). Social media search message 1400A arrives at media server 520 as social media search message 1400A', via wireless network 12.

In one example, media server 520 maintains in data store 530 a current listing of the media information and media items of mobile device 10B. In this first example, media server 520 performs a search of its current listing for mobile device 10B and identifies any media information or media items corresponding to the social media search parameter 'M' received in social media search message 1400A'. In this first example, media server 520 returns a social media search results message (not shown) to mobile device 10A, the social media search results message including information detailing any identified media information or media items.

In a second example, media server 520 either does not maintain a current listing of media information and media items of mobile device 10B, or media server 520 operates to perform an additional search of mobile device 10B to ensure that all media information and media items are located for the social media search. In this second example, media server 520 performs a search of its current listing for mobile device 10B and identifies any media information or media items corresponding to the social media search parameter 'M' received in social media search message 1400A'. Media server 520 also, or instead, executes a search of media information and media items stored in data store 531 of mobile device 10B. To search data store 531, media server 520 sends a search message to mobile device 10B indicating the search parameters received in social media search message 1400A'. Upon receipt of a search message from media server 520, mobile device 10B searches data store 531 for media information and media items that correspond to the social media search parameter 'M'. A listing of any corresponding media information and media items is returned to media server 520 (or alternatively directly to mobile device 10A). In this second example, media server 520 returns a social media search results message (not shown) to mobile device 10A, the social media search results message including information detailing any identified media information or media items in one or both of the current listing of media information and media items of mobile device 10B and in the results returned from mobile device 10B.

In the case of one or more messages being sent from mobile device 10A to mobile device 10B to search data store 531, social media search message 1400B is sent from mobile device 10A to mobile device 10B. Social media search message 1400B includes parameters indicating a social media search parameter 'M', a search source parameter (i.e., mobile device 10A) and a search destination parameter (i.e., mobile device 10B). Social media search message 1400B arrives at mobile device 10B as social media search message 1400B''', via wireless network 12 and possibly via wireless infrastructure 14. On receipt of social media search message 1400B''', mobile device 10B performs a search of data store 531 to locate media information and media items corresponding to the social media search parameter 'M' contained in social media search message 1400B'''. Corresponding media information and media items are grouped into a listing and the listing is sent back to mobile device 10A in a social media search results message.

A social media search of media information and media items stored in media catalog 500 includes the sending of social media search message 1400A from mobile device 10A to media server 520. Social media search message 1400A arrives at media server 520 in message 1400A' via wireless network 12. On receipt of social media search message 1400A', media server 520 performs a search of media catalog 500 and of data store 530 for media information and media items that correspond to the social media search parameter 'M' contained in social media search message 1400A'.

Media catalog 500 contains a large volume of media information and media items. A search for results corresponding to the social media search parameter 'M' may generate a large quantity of search results. A social media search results list may be prioritized, such that the most likely results are listed in priority, based, for example, on popularity of the media, on availability of the media to a user by virtue of it being in a media profile of a friend of the user, or on some other basis.

Data store 530 contains media information about a variety of media accessible in social media system 599. The variety of media includes both playlists and the social media playlists of friends and of fanned tastemakers. A search of data store 530 may be limited to include only the media that is accessible to a user of mobile device 10A, based, for example, on the friend information associated with the social media user account of a user of mobile device 10A. In this regard, a search of data store 530 will only result in media information and media items that are available to the user of mobile device 10A. For example, if data store 530 contains two playlists named 'M', and one of the playlists belongs to a friend of the user of mobile device 10A and the other does not, a search of data store 530 by media server 520 on behalf of the user of mobile device 10A only provides the one search result for the playlist that belongs to the user's friend. In another example, if the second playlist belongs to a friend of the friend, media server 520 is configured to provide both playlists in a search result message. In this manner, a user of social media system 599 may search for media stored in media catalog 500, as well as for media of the user's friends, as well as for media of friends of the user's friends. Additional examples provide for the searching of friends of friends of friends and so on.

Social media search results from the search of media catalog 500 and from the search of data store 530 are combined, and possibly sorted, by media server 520 before sending a social media search results message to mobile device 10A. The social media search results message includes information describing the media information and media items located by media server 520 during a search of media catalog 500 and of data store 530.

On receipt of social media search results messages from one or more of a local search of data store 532, mobile device 10B and media server 520, mobile device 10A performs additional operations using the social media search results messages, such as presenting the search results as described in relation to FIG. 8.

Mobile device 10A, media server 520 and mobile device 10B may perform additional processing, such as prioritizing social media search results or filtering social media search results.

According to these examples of a social media search, a user of mobile device 10A is able to search for media available to them from media catalog 500 as well as from their friends.

An application programming interface ("API") is provided that supports social media searching as described herein.

### Social Media Shuffle

Social media system 599 includes a variety of features that are enabled through a multitude of social operations. These social operations allow users to enjoy media, to share media with friends, and to interact with friends and with other members of social media system 599. One exemplary operation of a social media system and application is a social media shuffle.

A social media shuffle executes to provide a user of social media system 599 with the ability to enjoy the media of their own social media user profile and playlists, as well as the media of one or more friends and of all the media available in social media system 599. A user need only actuate a social media shuffle element to initiate enjoyment of media from each of these sources. The media enjoyed by the user as a result of actuation of the social media shuffle element comes from various sources, such as from mobile device 10A itself, from mobile device 10B and from media server 520 and media catalog 500.

In an exemplary social media shuffle operation, a user of mobile device 10A actuates a social media shuffle element to commence a social music shuffle operation. By way of example, a display screen 600 of an example of mobile device 10A is shown in FIG. 5. Shown in exemplary display screen 600 is homepage 610 of a social media application 605 executing at mobile device 10A. Exemplary homepage 610 includes user account information bar 615 which includes account information and update information for the user account associated with mobile device 10A. In the exemplary display shown in FIG. 5, the account information bar includes a user account display name, a user account status message, a user account picture and user account statistics, such as a count of listens, a count of likes and a count of comments. Exemplary homepage 610 includes timeline portion 620 that displays information about recent updates that are relevant to the user account, such as friend updates, updates about friends, comments from friends and the like. Also shown on exemplary homepage 610 are two social media shuffle elements: play all button 625 and shuffle button 630.

Play all button 625 and shuffle button 630 are actuated by a user of mobile device 10A to initiate a social media shuffle operation. Play all button 625 and shuffle button 630 are exemplary social media shuffle elements, and further examples exist, such as a menu item, a shortcut key, a dedicated physical button and the like.

In some examples, social media shuffle elements include further information that may be input by the user. For example, social media shuffle elements may include a text entry element, or a selection list element whereby the user may choose, for example, that they only wish to enjoy media from media catalog 500, or the user may choose that they only wish to enjoy media of one or more of their friends. These user choices are reflected in social media shuffle parameters as discussed below.

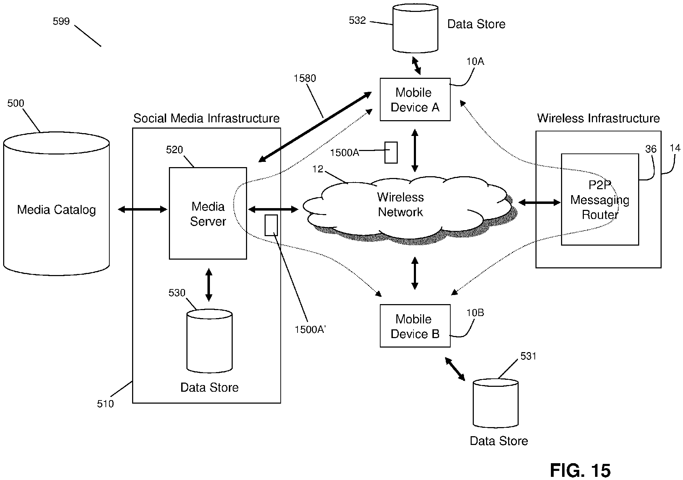

Regardless of the form of social media shuffle element, the effect of an actuation of the element operates to commence the execution of a social media shuffle operation as described below in relation to FIG. 15.

FIG. 15 shows many of the elements of social media system 599 described above. FIG. 15 also shows exemplary messages that operate to perform a social media shuffle operation.

Upon detection of an actuation of social media shuffle element, mobile device 10A initiates a social media shuffle operation by, for example, sending social media shuffle message 1500A to media server 520. Social media shuffle message 1500A includes social media shuffle parameters, including, for example, a source parameter (i.e., mobile device 10A) as well as a desired social media shuffle parameter. The desired social media shuffle parameter includes information about the social media shuffle operation desired by the user of mobile device 10A and may include parameters describing the order in which media is desired, the format in which media is desired, the sources of media to be used and the like.

Media server 520 receives social media shuffle message 1500A as social media shuffle message 1500A' via wireless network 12. Social media shuffle message 1500A' contains the parameters of social media shuffle message 1500A. On receipt of social media shuffle message 1500A', media server 520 initiates social media shuffle operations.

Media server 520 first creates a social media shuffle list of media that will be enjoyed by a user of mobile device 10A during the social media shuffle operation. The social media shuffle list includes media information and media items gathered from a variety of sources. Sources include media available in media catalog 500 as well as media available to friends of the user of mobile device 10A. In one example, media server 520 creates a social media shuffle list based on the social media shuffle parameters included in social media shuffle message 1500A. For example, if the social media shuffle parameters indicate that the user of mobile device 10A only wishes to enjoy the media of one of their friends, media server only includes media information and media items of the friend in the social media shuffle list.

Upon successful creation of a social media shuffle list, media server 520 either sends the social media shuffle list to mobile device 10A or coordinates a social media shuffle operation session with mobile device 10A (and possibly with mobile device 10B as well).

In the case of media server 520 sending the social media shuffle list to mobile device 10A, the social media shuffle list is sent to mobile device 10A in a message. On receipt of the message, mobile device 10A may begin retrieving or downloading the media information and media items listed in the social media shuffle list.

In the case of media server 520 coordinating a social media shuffle operation session with mobile device 10A, media server 520 may send some or all of the social media shuffle list to mobile device 10A in a message. Alternatively, media server 520 may not send the social media shuffle list, but instead begins a social media shuffle operation session.

In one example of a social media shuffle operation session, media server 520 sends a first media information or media item of the social media shuffle list to mobile device 10A for the user to enjoy. Subsequent to sending the first media information or media item, media server sends a second media information or media item of the social media shuffle list to mobile device 10A for enjoyment.

To coordinate a social media shuffle operation session, media server 520 facilitates the sending of media information and media items to mobile device 10A in accordance with the social media shuffle list. The sending of media information and media items is performed in accordance with the social media shuffle list. Social media shuffle operation session 1580 exemplifies the sending of media information and media items from media server 520 to mobile device 10A in accordance with a social media shuffle operation session.

Social media shuffle operation session 1580 also includes social media shuffle session coordination messaging between media server 520 and mobile device 10A to facilitate various social media shuffle operation session operations. Social media shuffle session coordination messages include a skip function (to skip a particular media), a rewind function, a stop function, a pause function, a randomize function and the like. On receipt of a social media shuffle session coordination message, media server 520 behaves in accordance with the received social media shuffle session coordination message, such as, for example, skipping to the next item in the social media shuffle list or stopping the social media shuffle operation session.

The social media shuffle operation session continues as described above until all media information and media items of the social media shuffle list have been sent to mobile device 10A or until a stop function message or a pause function message is received by media server 520 from mobile device 10A.

In a social media shuffle operation, media server 520 sends media information and media items to mobile device 10A either for storage at mobile device 10A or in a streaming mode wherein the media is enjoyed at mobile device 10A substantially as it is received.

In one example, media server 520 optimizes or prioritizes the ordering of the social media shuffle list based on, for example, the user's musical preferences or the closest matches of media information and media items in the social media shuffle list to those of the user or of the user's friends.

In another example, media server 520 coordinates the transfer of media information and media items from mobile device 10B to mobile device 10A. In such an example, media server 520 traverses the social media shuffle list and when an item of the list is identified as being stored in mobile device 10B, rather than sending the media information or media item from media server 520 to mobile device 10A, media server 520 causes mobile device 10B to send the item to mobile device 10A instead. This operation includes further messages between media server 520, mobile device 10A and mobile device 10B to establish the communication of media from mobile device 10B to mobile device 10A.

In the examples described herein, a user of mobile device 10A is able to enjoy a set of media available in social media system 599. The user is able to enjoy media in addition to the media currently in their social music profile. A social media shuffle operation allows users to enjoy a wide variety of media from a wide variety of sources with minimal user effort.

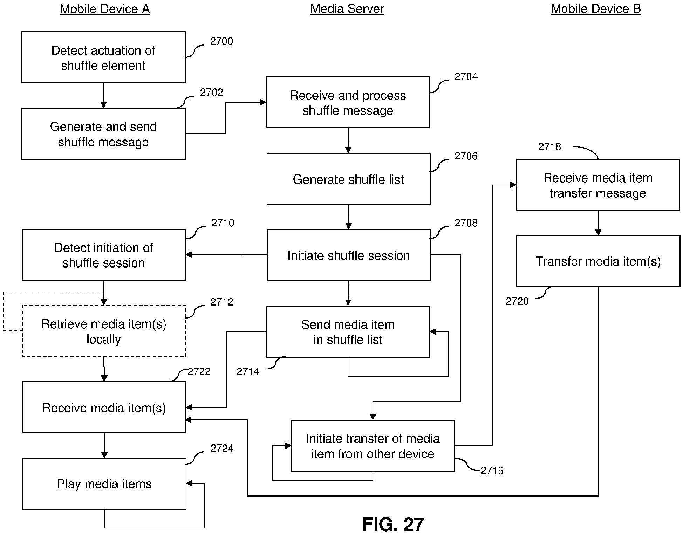

FIG. 27 illustrates example computer executable operations that may be performed in facilitating social media shuffle operations. At 2700, mobile device 10A detects actuation of a social media shuffle element and generates and sends a shuffle message 1500A to media server 520 at 2702. As discussed above, the shuffle message includes social media shuffle parameters, for example a source of the shuffle operation request, information about the social media operation desired by the user of mobile device 10A, etc. The shuffle message 1500A' is received by media server 520 at 2704 and the shuffle message 1500A' may be processed if necessary, e.g., to determine parameters of the shuffle message 1500A' to facilitate in executing the requested shuffle operation. Media server 520 generates a shuffle list at 2706, which includes the media items that will be enjoyed by the user of mobile device 10A during the social media shuffle operation, and initiates a shuffle session at 2708. Initiation of the shuffle session is detected by mobile device 10A at 2710. As discussed above, the shuffle session may be initiated by the media server 520 sending the shuffle list (or a portion thereof) to mobile device 10A or through coordination of a social media shuffle operation session with mobile device 10A and possibly other mobile devices 10 (e.g., mobile device 10B as shown in FIG. 27).

Once the shuffle session has been initiated, mobile device 10A may begin retrieving locally stored media items (e.g., from data store 532) at 2712 if any such locally stored media items are included in the shuffle list. Media server 520 may also send a media item identified in the shuffle list which is also accessible to media server 520 (e.g., stored in media catalog 500) to mobile device 10A at 2714. Media server 520 may also initiate the transfer of a media item identified in the shuffle list, and which is stored by another device, from that other device to mobile device 10A. In the example shown in FIG. 27, media server 520 initiates a transfer of a media item from mobile device 10B to mobile device 10A. As illustrated in FIG. 27, the operations of retrieving media items locally (at mobile device 10A), sending media items to mobile device 10A (by media server 520), and initiating a transfer of media items from other devices (by media server 520) may be repeated as necessary in accordance with the items listed in the shuffle list and the order in which the media items are to be played by mobile device 10A.

In this example, mobile device 10B receives a media item transfer message at 2718 and transfers at least one requested media item to mobile device 10A at 2720. Mobile device 10A receives media items at 2722, and as illustrated in FIG. 27, this operation may repeat in accordance with the sources of respective media items in the shuffle list. Media items obtained or received by mobile device 10A may then be played in accordance with the shuffle list at 2724. It can be appreciated that the media items received at 2722 may be received as complete files to be stored locally by mobile device 10A or may be streamed to media device 10A or otherwise provided in portions.

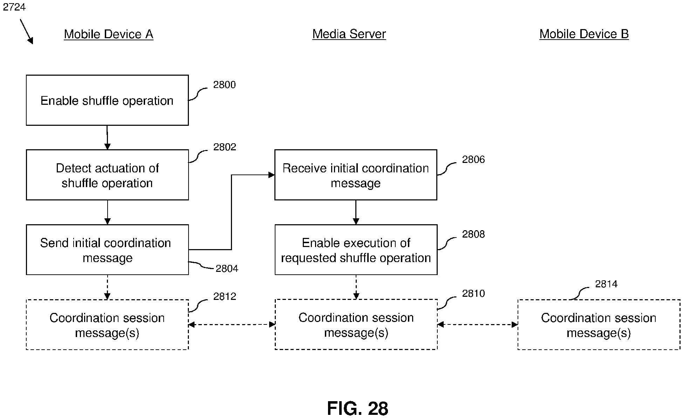

As discussed above, during a social media shuffle session, social media shuffle session coordination messaging may be facilitated between mobile device 10A and media server 520 and any other device participating in the shuffle session to perform a shuffle operation such as a pause operation, rewind operation, stop operation, skip operation, etc. FIG. 28 illustrates an example set of operations that may be performed in social media shuffle session coordination messaging while media items are being played by mobile device 10A at 2724. At 2800, mobile device 10A enables a shuffle operation to be actuated. For example, various shuffle operations may be displayed to a user of mobile device 10A in a media player application. Mobile device 10A detects actuation of a particular shuffle operation at 2802 and sends an initial coordination message to media server 520 at 2804. Media server 520 receives the initial coordination message at 2806 and enables execution of the requested shuffle operation at 2808. Since the media item being played may be provided by any one of multiple sources, media server 520 and a current source of the currently played media item may then engage in coordination session messaging at 2810, 2812, 2814. For example, media server 520 may detect that the currently playing media item is being sourced by mobile device 10B and send a coordination message to mobile device 10B to perform the requested shuffle operation, e.g., pausing a media stream. It can be appreciated that in examples wherein the media items are transferred to mobile device 10A for local storage, coordination messages may only be needed between mobile device 10A and media server 520.

### Social Media Radio Station

Social media system 599 includes a variety of features that are enabled through a multitude of social operations. These social operations allow users to enjoy media, to share media with friends, and to interact with friends and with other members of social media system 599. One exemplary operation of a social media system and application is a social media radio station.

A social media radio station operation provides a user of social media system 599 with the ability to enjoy a categorized list of media available in social media system 599. A user need only actuate a social media radio station element to initiate enjoyment of media from the categorized list of media. The media enjoyed by the user as a result of actuation of the social media radio station element comes from various sources, such as from mobile device 10A itself, from mobile device 10B and from media server 520 and media catalog 500. The categorized list of media may be pre-configured based on category or may be created on the fly, such as by automatic selection of one media item of the category at a time.

Categorized lists of media include groups of media information and media items based on a category. Categories include genre, author, artist, type, stature and the like. Examples of categories include classical music, documentaries, non-fiction, happy, uplifting, top 40, oldies, songs of the 1970s, books written after 2001, bands in a user profile, genres in a user profile, user mood and the like.

Categorized lists of media may also be created based on characteristics of media information contained in social media system 599. Examples of media information that may be used to create a category of media include a particular user, a particular location and a particular size. Examples of such particulars include all of Bob's songs, all songs stored in a Hip-hop repository, all movies starring Fred Savage and all books of less than 20 pages.

Categorized lists of media may be based on a combination of category and characteristic. For example, a category may be based on all uplifting songs in Bob's music playlist or all non-fiction books of less than 20 pages. Further examples, combinations and bases for categorization exist in a social media radio station.

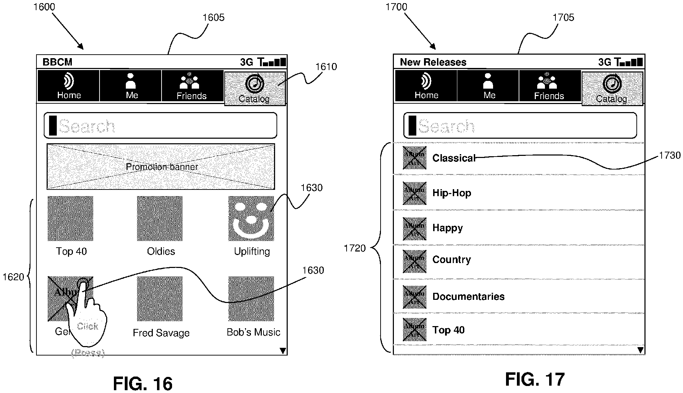

In an exemplary social media radio station operation, as shown in FIG. 16 and FIG. 17, a user of mobile device 10A selects a category of media and one or more media items related to the category then enjoyed by the user. The selected category of media corresponds to a social media radio station element.

FIG. 16 shows an exemplary application screen 1605 of catalog homepage 1610 of a social media application executing at mobile device 10A. Application screen 1605 includes category list 1620 which includes a number of category indications or social media radio station elements. Social media radio station element 1630 indicates an exemplary category of 'Uplifting' media and includes an exemplary graphical representation of the uplifting category of media. Social media radio station elements may include further and alternative representations, such as other textual descriptions, images, videos, music and the like.

Social media radio station element 1630 is actuated by a user actuation such as a key press or a touch of a touch sensitive display. The actuation is detected at mobile device 10A. In the example shown in FIG. 16, a user actuates social media radio station element 1640 which indicates a 'Genre' sub-category of media. Upon detection of actuation of social media radio station element 1640, mobile device 10A displays sub-category screen 1705 of FIG. 17.

Alternatively, upon actuation of social media radio station element 1630, playing of the media items from the categorized list of media of the 'Uplifting' category is commenced. Alternatively, a list of the media items of the categorized list of media is displayed and a user may select individual or multiple ones of the media items for playing. Alternatively, upon actuation of social media radio station element 1630, retrieval of the media items from the categorized list of media of the 'Uplifting' category is commenced.

Shown in FIG. 17 is an exemplary list of categories 1720 that corresponds to social media radio station element 1640 of FIG. 16. Exemplary list of categories 1720 includes a plurality of social media radio station elements, such as classical social media radio station element, hip-hop social media radio station element, happy social media radio station element, country social media radio station element, songs of the 70's radio station element, documentaries social media radio station element and top 40 social media radio station element. Other categories exist and are not shown. social media radio station element 1730 indicates a category of classical and includes a graphical representation and a textual description. Alternative graphical representations and textual description are present in other examples.

Upon detection of an actuation of social media radio station element 1730, media items in the categorized list of media corresponding to social media radio station element 1730 are played or retrieved at mobile device 10A. The media items in the categorized list are played or retrieved in order, and may be retrieved from one or more of media server 520, mobile device 10A and mobile device 10B. In one example the media items are streamed to mobile device 10A, and played substantially as received.

In one example, a user's ability to play or retrieve media items from a categorized list of media does not impact the user's allotted amount of media. The user is able to enjoy the categorized media in addition to their media allotment.

In another example, a user is able to select a currently playing media item from the categorized list of media items for addition to their social media user profile. Selection is made by the user, for example, actuating an 'Add to profile' indicator that is displayed by mobile device 10A while playing the media. Adding the media to a user profile is subject to the user's allotment of media.

In addition to playing the media as described above, a user is able to initiate a social media radio operation from an application screen displaying the user's friends. For example, a user may actuate a 'Play all' indicator while viewing the profile of a friend. Actuating the 'Play all' indicator will create a categorized list of media using the friend's media.

Alternatively, the user may input further information to create a categorized list of media for playing. Further information may include, for example, a genre of music. In this manner, a user may create a categorized list of media for playing, as a social media radio station, all of a friend's hip-hop music.

Alternatively, a user may create a categorized list of media items from more than one friend's media. For example, a user may select to create a categorized list of media that includes all of the hip-hop music in either of two friend's media profiles.

FIG. 15 shows many of the elements of social media system 599 described above. FIG. 15 also shows exemplary messages that operate to perform a social media radio station operation.

Upon detection of an actuation of social media radio station element 1730 of FIG. 17, mobile device 10A initiates a social media radio station operation by, for example, sending social media radio station message 1500A to media server 520. Social media radio station message 1500A includes social media radio station parameters, including, for example, a source parameter (i.e., mobile device 10A) as well as a desired social media radio station parameters corresponding to the category of social media radio station element 1730. The desired social media radio station parameters includes information about the social media radio station operation desired by the user of mobile device 10A and may include parameters describing the selected category of media, the desired sources of the media, the order in which media is desired, the format in which media is desired and the like.

Media server 520 receives social media radio station message 1500A as social media radio station message 1500A' via wireless network 12. Social media radio station message 1500A' contains the parameters of social media radio station message 1500A. On receipt of social media radio station message 1500A', media server 520 initiates social media radio station operations.

In one example, media server 520 first creates a social media radio station list of media that will be enjoyed by a user of mobile device 10A during the social media radio station operation. The social media radio station list includes media information and media items gathered from a variety of sources. Sources include media available in media catalog 500 as well as media available to friends of the user of mobile device 10A. In one example, media server 520 creates a social media radio station list based on the social media radio station parameters included in social media radio station message 1500A. For example, if the social media radio station parameters indicate that the user of mobile device 10A only wishes to enjoy the hip-hop media of one of their friends, media server only includes hip-hop media information and media items of the friend in the social media radio station list.

Upon successful creation of a social media radio station list, media server 520 either sends the social media radio station list to mobile device 10A or coordinates a social media radio station operation session with mobile device 10A (and possibly with mobile device 10B as well).

In the case of media server 520 sending the social media radio station list to mobile device 10A, the social media radio station list is sent to mobile device 10A in a message. On receipt of the message, mobile device 10A may begin retrieving or downloading the media information and media items listed in the social media radio station list.

In the case of media server 520 coordinating a social media radio station operation session with mobile device 10A, media server 520 may send some or all of the social media radio station list to mobile device 10A in a message. Alternatively, media server 520 may not send the social media radio station list, but instead begins a social media radio station operation session.

In one example of a social media radio station operation session, media server 520 sends a first media information or media item of the social media radio station list to mobile device 10A for the user to enjoy. Subsequent to sending the first media information or media item, media server sends a second media information or media item of the social media radio station list to mobile device 10A for enjoyment. This process repeats for each media information or media item in the social media radio station list.

To coordinate a social media radio station operation session, media server 520 facilitates the sending of media information and media items to mobile device 10A in accordance with the social media radio station list. The sending of media information and media items is performed in accordance with the social media radio station list. Social media radio station operation session 1580 exemplifies the sending of media information and media items from media server 520 to mobile device 10A in accordance with a social media radio station operation session.

Social media radio station operation session 1580 also includes social media radio station session coordination messaging between media server 520 and mobile device 10A to facilitate various social media radio station operation session operations. Social media radio station session coordination messages include a skip function (to skip a particular media), a rewind function, a stop function, a pause function, a randomize function and the like. On receipt of a social media radio station session coordination message, media server 520 behaves in accordance with the received social media radio station session coordination message, such as, for example, skipping to the next item in the social media radio station list or stopping the social media radio station operation session.

The social media radio station operation session continues as described above until all media information and media items of the social media radio station list have been sent to mobile device 10A or until a stop function message or a pause function message is received by media server 520 from mobile device 10A.

In a social media radio station operation, media server 520 sends media information and media items to mobile device 10A either for storage at mobile device 10A or in a streaming mode wherein the media is enjoyed at mobile device 10A substantially as it is received.

In one example, media server 520 optimizes or prioritizes the ordering of the social media radio station list based on, for example, the user's musical preferences or the closest matches of media information and media items in the social media radio station list to those of the user or of the user's friends.

In another example, media server 520 coordinates the transfer of media information and media items contained in social media radio station list from mobile device 10B to mobile device 10A. In such an example, media server 520 traverses the social media radio station list and when an item of the list is identified as being stored in mobile device 10B, rather than sending the media information or media item from media server 520 to mobile device 10A, media server 520 causes mobile device 10B to send the item to mobile device 10A instead. This operation includes further messages between media server 520, mobile device 10A and mobile device 10B to establish the communication of media from mobile device 10B to mobile device 10A.

In an alternative example, media server 520 does not create a social media radio station list, but instead selects media one at a time and delivers the selected media to mobile device 10A one at a time.

In accordance with the examples described herein, a user of a social media system is able to enjoy categorized media lists with minimal effort. Users need only select a category of media to enjoy media of that category.

### Social Media Tastemaker System and Application

Referring now to FIGS. 18 to 26, an exemplary tastemaker system and application are described that utilizes the principles of the social media system and application described above. It can be appreciated that in the following examples, mobile device 10B shown in FIG. 4 is used by a tastemaker and may be referred to as tastemaker mobile device 10B.

In one example there is provided a method for a tastemaker in a social media system comprising: identifying a first user of the social media system as a tastemaker; providing media information related to the tastemaker; identifying a second user of the social media system as a fan of the tastemaker; and sharing the media information related to the tastemaker with the second user.

In another example there is provided a method of becoming a fan of a tastemaker in a social media system comprising: providing a list of tastemaker elements for browsing, each of the tastemaker elements being related to a tastemaker; detecting an actuation of one of the list of tastemaker elements; and establishing a fan relationship for the tastemaker related to the actuated tastemaker element.

In yet another example there is provided a method for selecting a tastemaker in a social media system comprising: monitoring user activity within the social media system; identifying that the monitored user activity meets characteristics; notifying the user that their activity meets the characteristics; and providing a tastemaker indication in profile information of the user.

Referring again to FIG. 4, social media system 599 may also comprise tastemakers who are members of social media system 599. Tastemakers are influential and active users of social media system 599 who have been identified, either automatically or through user or administrative input, as members who merit being labelled a tastemaker.

In one example tastemakers are global tastemakers that are available to all users in social media system 599. Global tastemakers add media information to media system 599, create playlists, recommend media, and otherwise provide other users of social media system 599 with a brand of media that becomes synonymous with each individual tastemaker's style and tastes. Other users of social media system 599 become fans of global tastemakers in order to follow the tastemaker's choices and to share in the tastemaker's enjoyment of media. Fans are kept up to date about their tastemakers' activity within social media system 599, such as, for example, by receiving updates when the tastemaker adds new media to their profile, or when the tastemaker creates or modifies a playlist. In some examples, global tastemakers are artists, bands, media labels, brands, companies and the like.

In another example tastemakers are group tastemakers for a subset of users in social media system 599. Group tastemakers are like other non-tastemaker users of social media system 599 except that they have attained tastemaker status. Group tastemakers are identified as an influential member of a group of users, such as, for example, a tastemaker for a particular group of friends. Users of the group are kept up to date about the group tastemaker's activities because they are friends within social media system 599. A group tastemaker performs much of the same operations as a global tastemaker, although their following may be smaller than a global tastemaker. Using group tastemakers, a group of friends becomes aware of the group tastemaker's activity within social media system 599 and may choose to enjoy similar media as the group tastemaker. A group tastemaker is helpful for a group of friends who have one member that is more up-to-date, more active, more experimental or otherwise more influential within the group of friends. The group tastemaker helps other friends in a group to experience new and different media that might not otherwise be known to the group of friends.

Media server 520 also maintains and stores social media tastemaker profile information (or "a tastemaker profile") in data store 530 in relation to a plurality of tastemaker users of social media system 599 including global tastemakers and group tastemakers. Social media tastemaker profile information may include media information, friend information, fan information, update information, configuration information and account information.

Tastemaker information includes a set of information about a plurality of tastemakers for which the user of the user account has become a fan. Tastemaker information may include a list of identifiers, a list of names, a list of handles or any other suitable information that identifies a set of tastemakers. Tastemaker information may also include information about particular tastemakers in the set of tastemakers, including pictures, names, status and the like. Tastemakers include other users of social media system 599. Tastemaker information further comprises a social media tastemaker list. A social media tastemaker list is a current set of tastemakers for a given user account. A user who has become a fan of a particular tastemaker is provided access to the tastemaker's media and receives updates about the tastemaker's activities within social media system 599.

Fan information includes a set of information about a plurality of users that have become a fan of a tastemaker. Fan information may include a list of identifiers, a list of names, a list of handles or any other suitable information that identifies a set of fans. Fan information may also include information about particular fans in the set of fans, including pictures, names, status and the like. Fans include other users of social media system 599. Fan information further comprises a social media fan list. A social media fan list is a current set of fans for a given tastemaker. A user who has become a fan of a particular tastemaker is provided access to the tastemaker's media and receives updates about the tastemaker's activities within social media system 599.

In one example, users of social media system 599 are only permitted to become fans of a limited number of tastemakers.

Portions of each tastemaker's social media profile information are shared within social media system 599. For example, the media information of a tastemaker's profile may be shared with other users of social media system 599 who have become a fan of the tastemaker. The sharing of tastemaker profile information allows fans to follow and interact with the tastemaker within social media system 599. Exemplary operations that may be performed by a non-tastemaker user of social media system 599 and that are related to tastemakers are described below. Tastemaker related operations include a browsing tastemaker operation, a becoming a fan operation, enjoying a tastemaker's media operations and a ceasing to be a fan operation.

Tastemakers are identified as such using an appropriate identifier, such as a tastemaker identifier stored in relation to a tastemaker account's social media tastemaker profile information. Media server 520 maintains a listing of tastemakers. The listing of tastemakers may be browsed by other users of social media system 599.

FIG. 18 shows exemplary catalog homepage screen 1805 which is displayed on a display of mobile device 10A. Catalog homepage screen 1805 includes a plurality of category elements in category list 1820. Each category element, such as category element 1830 and category element 1840, includes category information, such as text and images, about the specific category. Category element 1830 relates to a 'Featured Tastemaker' category. On detection of an actuation of category element 1830 by, for example, depression of a key or a touch of a touch sensitive display, tastemaker list page 1905 of FIG. 19 is displayed.

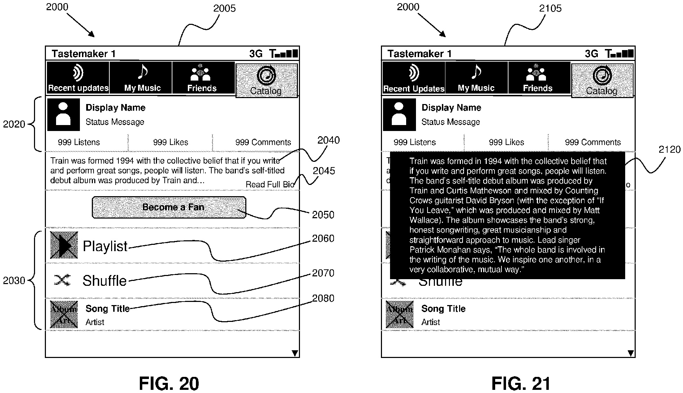

Tastemaker list page 1905 includes tastemaker list 1920 that includes a plurality of tastemaker elements. Each tastemaker element, such as tastemaker element 1930 and tastemaker element 1940 include tastemaker information, such as text and images, about the specific tastemaker. Tastemaker element 1930 relates to a 'Tastemaker 1' tastemaker. On detection of an actuation of tastemaker element 1930 by, for example, depression of a key or a touch of a touch sensitive display, tastemaker homepage 2005 of FIG. 20 is displayed.

Tastemaker homepage 2005 includes a plurality of information elements and action elements that relate to a particular tastemaker. Tastemaker information element 2020 includes general information about the tastemaker, such as the tastemaker's name, a graphical representation of the tastemaker, statistical information about how many listens, likes and comments relate to the tastemaker and biographical information about the tastemaker. Additional or alternative elements may be included in some examples and the arrangement of specific elements may be altered. Tastemaker homepage 2005 may also include a "Read Full Bio" element 2045 which on detection of an actuation of the element causes a full biography of the tastemaker to be displayed, as shown in full biography element 2120 of FIG. 21.

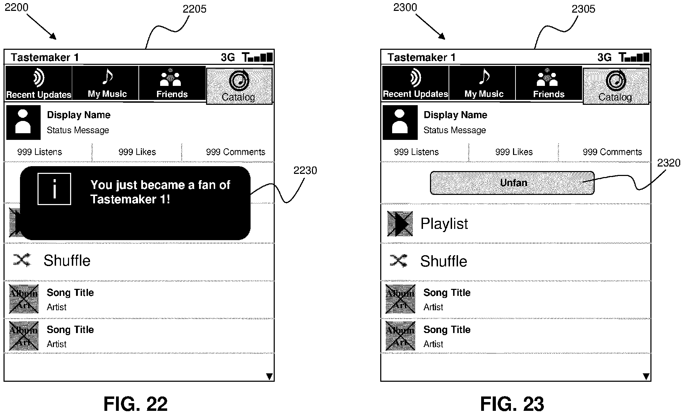

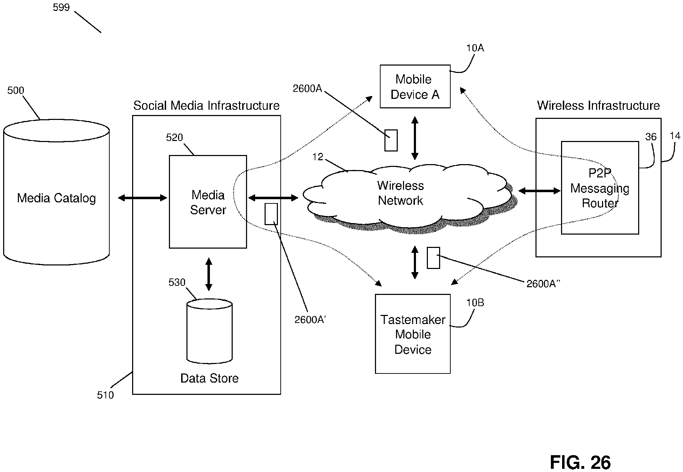

Tastemaker homepage 2005 of FIG. 20 also includes a "Become a Fan" element 2050. Functionality associated with become a fan element 2050 enables a user of mobile device 10A to become a fan of a tastemaker according to a become a fan operation. Upon detection of an actuation of "Become a Fan" element 2050, a message (shown as message 2600A in FIG. 26) is sent from mobile device 10A. The message includes an indication that the user of mobile device 10A wants to become of fan of the tastemaker. The message includes a representation of the user of mobile device 10A as well as a representation of the tastemaker, possibly including names or other identifiers. Media server 520 receives message 2600A as message 2600A', via wireless network 12. On receipt of the message, media server 520 stores a representation of the message as tastemaker information in association with the social media profile of the user of mobile device 10A and in association with the tastemaker profile of the tastemaker. In some examples media server 520 performs verification of the message before storing a representation of the fan relationship. For example, media server 520 verifies that the user is not already following a pre-determined number of tastemakers. In some examples media server 520 sends a message to mobile device 10A indicating that the "Become a Fan" operation completed successfully (see success element 2230 in FIG. 22). In further examples the substance of the message is also received at a mobile device of the tastemaker to let them know that the user of mobile device 10A has become their fan, as depicted by message 2600A" in FIG. 26. Message 2600A" originates from one of mobile device 10A or media server 520 or both.

FIG. 22 shows an exemplary social media application screen displayed on a display of mobile device 10A that is displayed upon completion of a successful become a fan operation. Shown in FIG. 22 is exemplary success element 2230 which indicates that the user of mobile device 10A is now a fan of 'Tastemaker 1'.

FIG. 23 shows tastemaker homepage 2305 after a user of mobile device 10A has become a fan of the tastemaker. Tastemaker homepage 2305 includes "Unfan" element 2320 which provides a user of mobile device 10A the ability to cease being a fan of the tastemaker through execution of a "Ceasing to be a fan" operation. A "Ceasing to be a fan" operation operates substantially in the same manner as a "Become a Fan" operation as described above. The message sent by mobile device 10A subsequent to detecting an actuation of "Unfan" element 2320 includes an indication that the user of mobile device 10A wants to cease being a fan of the tastemaker.

It is to be understood that the exemplary graphical elements shown in the figures are one example of a social media application. Graphical elements, such as "Become a Fan" element 2050 and "Unfan" element 2320 may be represented in different configurations and in different locations and on different screens. For example, "Become a Fan" element 2050 may be displayed with tastemaker element 1930 in tastemaker list 1820.

Subsequent to a successful "Become a Fan" operation, the user of mobile device 10A is able to perform media enjoyment operations in relation to the media information of the tastemaker's tastemaker profile. Media enjoyment operations include viewing the tastemaker's current media information (such as media items and playlists), playing the tastemaker's current media information (such as playing an individual media item or playing an entire playlist) and receiving updates about the tastemaker's activity within social media system 599.

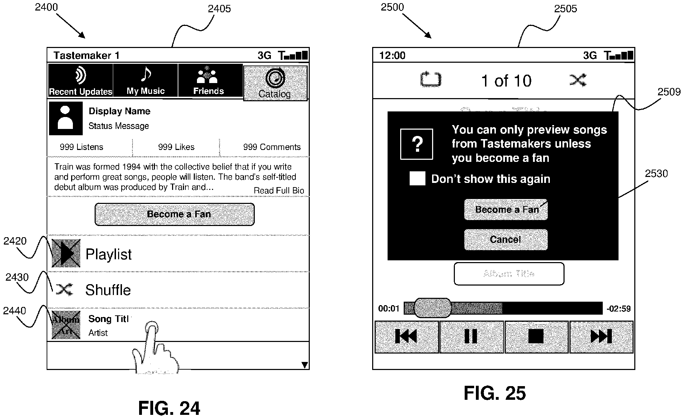

Shown in FIG. 24 is a social media application screen showing tastemaker homepage 2405 as displayed to a user of mobile device 10A. Displayed on tastemaker homepage 2405 are indicators of media enjoyment operations that can be actuated by a user of mobile device 10A to execute media enjoyment operations, as well as indicators of metrics indicative of the tastemaker's recommendation ability, such as number of listens, number of likes, number of comments, number of fans, etc. Media enjoyment operation indicators include playlist operation element 2420, shuffle element 2430 and media element 2440. Other media enjoyment operation indicators are displayed in some examples.

Playlist operation element 2420 provides access to a listing of the tastemaker's playlists. Upon detection of an actuation of playlist operation element 2420, mobile device 10A displays the tastemaker's playlists. In some examples displaying playlists requires mobile device 520 to request this information from media server 520 or from tastemaker mobile device 10B (shown in FIG. 26). Alternatively or additionally, upon detection of an actuation of playlist operation element 2420 the playing of the media items included in a playlist referenced by playlist operation element 2420 may be commenced.

Shuffle element 2430 provides access to a shuffle of the tastemaker's media. Upon detection of an actuation of shuffle element 2430, a shuffle operation is executed which plays all of the media of the tastemaker in a random, or semi-random, manner. A shuffle operation includes messages sent between mobile device 10A and media server 520. In some examples media server 520 coordinates the shuffle operation and sends individual media items from the tastemaker's media information to mobile device 10A for playing. In some examples media server 520 determines the order that individual media items are sent to mobile device 10A. Individual media items are sent to mobile device 10A for storage or for immediate playing, such as in a streaming mode wherein the media is played substantially as it is received. Media server 520 coordinates the transfer of individual media items to mobile device 10A. In some examples media server 520 retrieves or forwards individual media elements stored in media catalog 500. In other examples media server 520 sends media information to mobile device 10A so that mobile device 10A may retrieve the individual media items from, for example, media catalog 500 or from tastemaker mobile device 10B.

Media element 2440 provides access to an individual media item of the tastemaker's media information. The individual media item includes a song, an album, a playlist, a movie, a book and the like. Access includes viewing further information about the individual media item as well as enjoying (i.e., playing) the media item itself. Upon detection of an actuation of media element 2440 a media enjoyment operation is executed. In some examples, the media enjoyment operation includes playing the individual media item identified by media element 2440. Playing the individual media item includes mobile device 10A retrieving the individual media item. Retrieval includes messaging with media server 520 or with tastemaker mobile device 10B.

In some examples users are able to add individual media items of the tastemaker's media information to their own social media profile by, for example, actuating an 'Add' element displayed on a display of mobile device 10A while the individual media item is being played at mobile device 10A, or by actuating a similar 'Add' element displayed in a listing of the tastemaker's media information. In some examples, a user of mobile device 10A is able to add all of the media of a tastemaker's playlist to their own social media profile pursuant to an actuation of an 'Add all' element displayed in association with the playlist.

In some examples, a user of mobile device 10A is only able to enjoy a limited preview of a tastemaker's media unless they become a fan of the tastemaker. As shown in FIG. 25, a user is notified by preview notification dialog 2509 that they may only preview a tastemaker's media unless they become a fan of the tastemaker. "Become a Fan" element 2530 (similar to become a fan element 2050) provides a user with access to a "Become a Fan" operation as described herein. In some examples preview notification dialog 2509 is displayed on a display of mobile device 10A pursuant to detection of a user actuation of a media element associated with an individual media item of a tastemaker that they are not currently a fan of. If a user wishes to enjoy full access to a tastemaker's media, the user must become a fan of the tastemaker.

### Tastemaker Selection

Global and group tastemakers are selected to be tastemakers either automatically or by user or administrative input. In the case of user input, a group of friends may designate one user as a group tastemaker for the group through a nomination operation or otherwise. In the case of administrative input, an administrator of social media system 599 selects a user to be a tastemaker through a selection operation or otherwise.

Automatic selection of tastemakers is accomplished through the monitoring of user activity within social media system 599. Monitoring includes media server 520 tracking usage of a user's profile information. Tracking includes counting activity within social media system 599. Activities include referrals, other users' enjoyment of the user's profile information, comments by the user or about the user's profile information, indications that users like the media information of the user, updates to the user's media information and any other contributions made by the user to social media system 599.

Media server 520 executes a tastemaker selection operation to select tastemakers. A tastemaker selection operation includes generating a tastemaker selection operation score for a user based on their activities as well as updating a previously generated tastemaker selection operation score based on their recent activity. The tastemaker selection operation selects users who are eligible to become tastemakers as those users whose tastemaker selection operation score meets certain tastemaker characteristics. A tastemaker who has previously qualified as a tastemaker may have their tastemaker status revoked if an updated tastemaker selection operation score reveals that the tastemaker's activity no longer meets the tastemaker characteristics.

In some examples a user may view their tastemaker selection operation score using a social media application executing at mobile device 10A.

By way of example, a tastemaker selection operation score may be calculated using the following activities and weightings of Table 1:

**Table 1**

| Activity | Designator | Weighting | Weighting Designator |
|---|---|---|---|
| Free User Referral | a | x1 | A |
| Paid User Referral | b | x1 | B |
| Media Listens | c | x1 | C |
| Media Commenting | d | x1 | D |
| Media Likes | e | x1 | E |
| Playlist Listens | f | x1 | F |
| Playlist Comments | g | x1 | G |
| Playlist Likes | h | x1 | H |
| Service Activity | i | x1 | I |

In this example, a tastemaker selection operation score is calculated as the result of a mathematical formula combining the variables above, such as in a summation of each designator multiplied by its associated weighting. The weighting designators A, B, C, D, E, F, G, H and I are all equal to their associated weighting of 1 in this example. Other examples include different weightings and different activities. Different activities may be given different weightings. Time-sensitive activities, such as amount of time within the service, variable weighting over time and Bayesian rating may also be used in calculating a tastemaker selection operation score.

In this example, the referenced activities include Free User Referrals, Paid User Referrals, Media Listens, Media Commenting, Media Likes, Playlist Listens, Playlist Comments, Playlist Likes and Service Activity. Free user referrals refer to activities whereby a user invites or otherwise entices a new user to join social media system 599 and where the new user elects to use a free version of social media system 599. Paid user referrals refer to activities whereby a user invites or otherwise entices a new user to join social media system 599 and where the new user elects to use a paid version of social media system 599. Media listens refer to activities whereby another user of social media system 599 listens to a media item of the user's media information. Media comments refer to activities whereby another user of social media system 599 comments on a media item of the user's media information. Media likes refer to activities whereby another user of social media system 599 indicates that the like a media item of the user's media information. Playlist listens refer to activities whereby another user of social media system 599 listens to a playlist of the user's media information. Playlist comments refer to activities whereby another user of social media system 599 comments on a playlist of the user's media information. Playlist likes refer to activities whereby another user of social media system 599 indicates that the like a playlist of the user's media information. Service activity refers to other activity within social media system 599, including playlist creation, commenting on other user's media information and the like.

In some examples, tastemaker selection operation scores are calculated by media server 520 as the events are noted by media server 520 such that an up to date score is always provided. Alternatively, or additionally, tastemaker selection operation scores are calculated according to a schedule (such as once per day or week) or are calculated on demand. In some examples mobile device 10A provides a tastemaker selection operation score to media server 520 based on activity observed at mobile device 10A. In some examples media server 520 stores tastemaker selection operation scores in data store 530.

Once media server 520 has selected users that are eligible to become tastemakers, those users are notified via a message that they have been selected to become a tastemaker. On receipt of the message, the user may accept or decline the offer to become a tastemaker. If accepted, an indication that the user is now a tastemaker is stored or maintained by media server 520 in relation to the user's profile information. In some examples, media server 520 also creates, stores and maintains new tastemaker information for association with the newly selected tastemaker.

In some examples, tastemakers may also be given additional rights within the social media system 599. For example, tastemakers may have an increased allotment of media in their social media playlist, or they may be granted access to additional functionality within social media system 599.

FIG. 26 shows social media system 599 of FIG. 4 with additional tastemaker elements and messages as referred to and described herein.

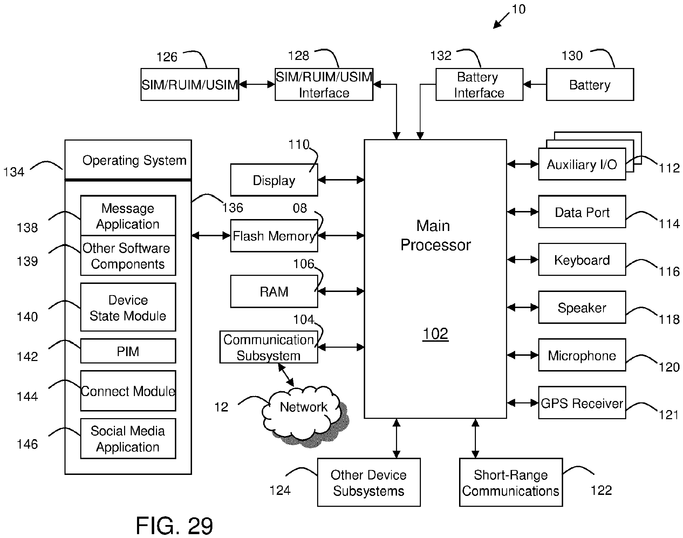

Referring now to FIG. 29, shown therein is a block diagram of an example of a mobile device 10. The mobile device 10 comprises a number of components such as a main processor 102 that controls the overall operation of the mobile device 10. Communication functions, including data and voice communications, are performed through a communication subsystem 104. The communication subsystem 104 receives messages from and sends messages to a wireless network 12. In this example of the mobile device 10, the communication subsystem 104 is configured in accordance with the Global System for Mobile Communication (GSM) and General Packet Radio Services (GPRS) standards. The GSM/GPRS wireless network is used worldwide and it is expected that these standards will be superseded eventually by 3G and 4G networks such as Enhanced Data-rates for Global Evolution (EDGE), Universal Mobile Telecommunications System (UMTS) and High-Speed Downlink Packet Access (HSDPA), Long Term Evolution (LTE), Worldwide Interoperability for Microwave Access (Wi-Max), etc. New standards are still being defined, but it is believed that they will have similarities to the network behaviour described herein, and it will also be understood by persons skilled in the art that the examples described herein are intended to use any other suitable standards that are developed in the future. The wireless link connecting the communication subsystem 104 with the wireless network 12 represents one or more different Radio Frequency (RF) channels, operating according to defined protocols specified for GSM/GPRS communications. With newer network protocols, these channels are capable of supporting both circuit switched voice communications and packet switched data communications.

The main processor 102 also interacts with additional subsystems such as a Random Access Memory (RAM) 106, a flash memory 108, a display 42, an auxiliary input/output (I/O) subsystem 112, a data port 114, a keyboard 116, a speaker 118, a microphone 120, GPS receiver 121, short-range communications 122 and other device subsystems 124.

Some of the subsystems of the mobile device 10 perform communication-related functions, whereas other subsystems provide "resident" or on-device functions. By way of example, the display 110 and the keyboard 116 are used for both communication-related functions, such as entering a text message for transmission over the network 12, and device-resident functions such as a calculator or task list. Display 110 is a touch-sensitive display or a non touch-sensitive display.

The mobile device 10 sends and receives communication signals over the wireless network 12 after required network registration or activation procedures have been completed. Network access is associated with a subscriber or user of the mobile device 10. To identify a subscriber, the mobile device 10 may use a subscriber module. Examples of such subscriber modules include a Subscriber Identity Module (SIM) developed for GSM networks, a Removable User Identity Module (RUIM) developed for CDMA networks and a Universal Subscriber Identity Module (USIM) developed for 3G networks such as UMTS. In the example shown, a SIM/RUIM/USIM 126 is to be inserted into a SIM/RUIM/USIM interface 128 in order to communicate with a network. The SIM/RUIM/USIM component 126 is one type of a conventional "smart card" that can be used to identify a subscriber of the mobile device 10 and to personalize the mobile device 10, among other things. Without the component 126, the mobile device 10 may not be fully operational for communication with the wireless network 12. By inserting the SIM/RUIM/USIM 126 into the SIM/RUIM/USIM interface 128, a subscriber can access all subscribed services. Services may include: web browsing and messaging such as e-mail, voice mail, SMS, and MMS. More advanced services may include: point of sale, field service and sales force automation. The SIM/RUIM/USIM 126 includes a processor and memory for storing information. Once the SIM/RUIM/USIM 126 is inserted into the SIM/RUIM/USIM interface 128, it is coupled to the main processor 102. In order to identify the subscriber, the SIM/RUIM/USIM 126 can include some user parameters such as an International Mobile Subscriber Identity (IMSI). An advantage of using the SIM/RUIM/USIM 126 is that a subscriber is not necessarily bound by any single physical mobile device. The SIM/RUIM/USIM 126 may store additional subscriber information for a mobile device as well, including datebook (or calendar) information and recent call information. Alternatively, user identification information can also be programmed into the flash memory 108.

The mobile device 10 is typically a battery-powered device and includes a battery interface 132 for receiving one or more batteries 130 (typically rechargeable). In at least some embodiments, the battery 130 can be a smart battery with an embedded microprocessor. The battery interface 132 is coupled to a regulator (not shown), which assists the battery 130 in providing power V+ to the mobile device 10. Although current technology makes use of a battery, future technologies such as micro fuel cells may provide the power to the mobile device 10.

The mobile device 10 also includes an operating system 134 and software components 136 to 146 which are described in more detail below. The operating system 134 and the software components 136 to 146 that are executed by the main processor 102 are typically stored in a persistent store such as the flash memory 108, which may alternatively be a read-only memory (ROM) or similar storage element (not shown). Those skilled in the art will appreciate that portions of the operating system 134 and the software components 136 to 146, such as specific device applications, or parts thereof, may be temporarily loaded into a volatile store such as the RAM 106. Other software components can also be included, as is well known to those skilled in the art.

The subset of software applications 136 that control basic device operations, including data and voice communication applications, may be installed on the mobile device 10 during its manufacture. Other software applications include a message application 138 that can be any suitable software program that allows a user of the mobile device 10 to send and receive electronic messages. Various alternatives exist for the message application 138 as is well known to those skilled in the art. Messages that have been sent or received by the user are typically stored in the flash memory 108 of the mobile device 10 or some other suitable storage element in the mobile device 10. In at least some embodiments, some of the sent and received messages may be stored remotely from the mobile device 10 such as in a data store of an associated host system that the mobile device 10 communicates with.

The software applications can further comprise a device state module 140, a Personal Information Manager (PIM) 142, and other suitable modules (not shown). The device state module 140 provides persistence, i.e. the device state module 140 ensures that important device data is stored in persistent memory, such as the flash memory 108, so that the data is not lost when the mobile device 10 is turned off or loses power.

The PIM 142 includes functionality for organizing and managing data items of interest to the user, such as, but not limited to, e-mail, contacts, calendar events, voice mails, appointments, and task items. A PIM application has the ability to send and receive data items via the wireless network 12. PIM data items may be seamlessly integrated, synchronized, and updated via the wireless network 12 with the mobile device subscriber's corresponding data items stored and/or associated with a host computer system. This functionality creates a mirrored host computer on the mobile device 10 with respect to such items. This can be particularly advantageous when the host computer system is the mobile device subscriber's office computer system.

The mobile device 10 may also comprise a connect module 144, and an IT policy module (not shown). The connect module 144 implements the communication protocols that are required for the mobile device 10 to communicate with the wireless infrastructure and any host system, such as an enterprise system, that the mobile device 10 is authorized to interface with.

The connect module 144 includes a set of APIs that can be integrated with the mobile device 10 to allow the mobile device 10 to use any number of services associated with the enterprise system. The connect module 144 allows the mobile device 10 to establish an end-to-end secure, authenticated communication pipe with a host system (not shown). A subset of applications for which access is provided by the connect module 144 can be used to pass IT policy commands from the host system to the mobile device 10. This can be done in a wireless or wired manner. These instructions can then be passed to an IT policy module (not shown) to modify the configuration of the device 10. Alternatively, in some cases, the IT policy update can also be done over a wired connection.

Social media application 146 comprises computer executable instructions to execute the social media application functionality described herein.

Other types of software applications or components 139 can also be installed on the mobile device 10. These software applications 139 can be pre-installed applications (i.e. other than message application 138) or third party applications, which are added after the manufacture of the mobile device 10. Examples of third party applications include games, calculators, utilities, etc.

The additional applications 139 can be loaded onto the mobile device 10 through at least one of the wireless network 12, the auxiliary I/O subsystem 112, the data port 114, the short-range communications subsystem 122, or any other suitable device subsystem 124. This flexibility in application installation increases the functionality of the mobile device 10 and may provide enhanced on-device functions, communication-related functions, or both. For example, secure communication applications may enable electronic commerce functions and other such financial transactions to be performed using the mobile device 10.

The short-range communications subsystem 122 provides for communication between the mobile device 10 and different systems or devices, without the use of the wireless network 12. For example, the subsystem 122 may include an infrared device and associated circuits and components for short-range communication. Examples of short-range communication standards include standards developed by the Infrared Data Association (IrDA), Bluetooth, and the 802.11 family of standards developed by IEEE.

In use, a received signal such as a text message, an e-mail message, or web page download may be processed by the communication subsystem 104 and input to the main processor 102. The main processor 102 may then process the received signal for output to the display 110 or alternatively to the auxiliary I/O subsystem 112. A subscriber may also compose data items, such as e-mail messages, for example, using the keyboard 116 in conjunction with the display 110 and possibly the auxiliary I/O subsystem 112. The auxiliary subsystem 112 may comprise devices such as: a touch screen, mouse, track ball, infrared fingerprint detector, or a roller wheel with dynamic button pressing capability. The keyboard 116 is an alphanumeric keyboard and/or telephone-type keypad. However, other types of keyboards may also be used, such as a virtual or "soft" keyboard rendered as images on a touch screen. A composed item may be transmitted over the wireless network 12 through the communication subsystem 104.

For voice communications, the overall operation of the mobile device 10 in this example is substantially similar, except that the received signals are output to the speaker 118, and signals for transmission are generated by the microphone 120. Alternative voice or audio I/O subsystems, such as a voice message recording subsystem, can also be implemented on the mobile device 10. Although voice or audio signal output is accomplished primarily through the speaker 118, the display 110 can also be used to provide additional information such as the identity of a calling party, duration of a voice call, or other voice call related information.

It will be appreciated that any application, module or component exemplified herein that executes instructions or operations may include or otherwise have access to, or be stored on, computer readable media such as storage media, computer storage media, or data storage devices (removable and/or non-removable) such as, for example, magnetic disks, optical disks, or tape. Computer storage media may include volatile and non-volatile, removable and non-removable media implemented in any method or technology for storage of information, such as computer readable instructions, data structures, program modules, or other data. Examples of computer storage media include RAM, ROM, EEPROM, flash memory or other memory technology, CD-ROM, digital versatile disks (DVD) or other optical storage, magnetic cassettes, magnetic tape, magnetic disk storage or other magnetic storage devices, or any other medium which can be used to store the desired information and which can be accessed by an application, module, or both. Any such computer storage media may be part of the mobile device 10, any component of or related to the wireless infrastructure 14, etc., or accessible or connectable thereto. Any application or module herein described may be implemented using computer readable/executable instructions that may be stored or otherwise held by such computer readable media.

It will also be appreciated that the example embodiments and corresponding diagrams used herein are for illustrative purposes only. Different configurations and terminology can be used without departing from the principles expressed herein. For instance, components and modules can be added, deleted, modified, or arranged with differing connections without departing from these principles.

The steps or operations in the diagrams described herein are just for example. There may be many variations to these steps or operations without departing from the spirit of a system and application for social media.

The figures herein show an example of a social media system including social media infrastructure 510 of FIG. 4. Those skilled in the art will appreciate that multiple instances of social infrastructure may co-exist.

Reference has been made throughout to songs and music but it is to be understood that the principles of a social media system and application apply equally to other types of digital media such as movies, pictures, books and the like. Those skilled in the art will appreciate that necessary modifications may be made to accommodate further types of media without departing from the social media system and application described herein.

Although the above has been described with reference to certain specific embodiments, various modifications thereof will be apparent to those skilled in the art without departing from the scope of the claims appended hereto.

## Claims

1. A method for shuffling media items, the method comprising:
receiving a shuffle message containing an indication of actuation of a media shuffle element on a mobile device;
generating a shuffle list using the shuffle message, the shuffle list including a plurality of media items to be played by the mobile device; and
facilitating transfer of at least one media item included in the shuffle list to the mobile device.

2. The method of claim 1, comprising initiating a shuffle session to provide at least a portion of the shuffle list to the mobile device to enable the mobile device to retrieve any of the media items in the shuffle list stored locally by the mobile device.

3. The method of claim 1 or claim 2, comprising sending a media item included in the shuffle list from a media server to the mobile device, the media item being associated with a service subscribed to by another device.

4. The method of any one of claims 1 to 3, comprising initiating a transfer of a media item from the shuffle list from another device to the mobile device and, optionally comprising identifying that the media item from the shuffle list is stored by the other device.

5. The method of any one of claims 1 to 4, comprising receiving a coordination message containing an indication of a shuffle operation, and enabling execution of the shuffle operation and, optionally, the shuffle operation comprising any one of a skip function, a rewind function, a stop function, a pause function, and a randomize function and, optionally comprising sending a further coordination message to another device providing a currently played media item to have the other device execute the shuffle operation and, optionally, the shuffle operation being executed on a media server.

6. The method of any one of claims 1 to 5, the shuffle message including at least one shuffle parameter and, optionally, the at least one shuffle parameter comprising any one or more of a source of the shuffle message, an order for providing the media items, a format for the media items, and sources of the respective media items.

7. A method for shuffling media items, the method comprising:
detecting actuation of a media shuffle element on a mobile device;
generating a shuffle message containing an indication of actuation of the media shuffle element;
sending the shuffle message to a media server; and
receiving at least one media item included in a shuffle list generated by the media server.

8. The method of claim 7, comprising receiving at least a portion of the shuffle list, the shuffle list having been generated by the media server using the shuffle message and including a plurality of media items to be played by the mobile device and, optionally, comprising retrieving any of the media items in the shuffle list stored locally by the mobile device.

9. The method of claim 7 or claim 8, comprising:
receiving a media item included in the shuffle list from the media server, the media item being associated with a service subscribed to by another device; or
receiving a media item included in the shuffle list from another device.

10. The method of any one of claims 7 to 9, comprising sending a coordination message to the media server containing an indication of a shuffle operation to enable the media server to execute the shuffle operation and, optionally, the shuffle operation comprising any one of a skip function, a rewind function, a stop function, a pause function, and a randomize function and, optionally, the shuffle operation being executed on the media server and, optionally, the shuffle operation being executed on the mobile device.

11. The method of any one of claims 7 to 10, the shuffle message including at least one shuffle parameter and, optionally, the at least one shuffle parameter comprising any one or more of a source of the shuffle message, an order for providing the media items, a format for the media items, and sources of the respective media items.

12. The method of any one of claims 1 to 11, wherein the shuffle message comprises metadata associated with any one or more of: a composer, a year of creation, and a genre.

13. A computer readable medium comprising computer executable instructions that when executed by a processor, perform operations for shuffling media items according to the method of any one of claims 1 to 12.

14. A media server comprising a processor, memory, and at least one communication interface, the memory comprising computer executable instructions that when executed by the processor, perform operations for shuffling media items according to the method of any one of claims 1 to 6.

15. A mobile device comprising a processor, memory, and at least one communication interface, the memory comprising computer executable instructions that when executed by the processor, perform operations for shuffling media items according to the method of any one of claims 7 to 12.
